(19) Europäisches Patentamt
European Patent Office
Office européen des brevets

(11) Veröffentlichungsnummer: **0 303 081 B1**

# (12) EUROPÄISCHE PATENTSCHRIFT

(45) Veröffentlichungstag der Patentschrift: **02.01.92**

(51) Int. Cl.[5]: **C09B 62/513**, D06P 1/384

(21) Anmeldenummer: **88111802.0**

(22) Anmeldetag: **22.07.88**

Die Akte enthält technische Angaben, die nach dem Eingang der Anmeldung eingereicht wurden und die nicht in dieser Patentschrift enthalten sind.

## (54) Wasserlösliche Disazoverbindungen, Verfahren zu ihrer Herstellung und ihre Verwendung als Farbstoffe.

(30) Priorität: **28.07.87 DE 3724931**

(43) Veröffentlichungstag der Anmeldung:
**15.02.89 Patentblatt 89/07**

(45) Bekanntmachung des Hinweises auf die Patenterteilung:
**02.01.92 Patentblatt 92/01**

(84) Benannte Vertragsstaaten:
**BE CH DE ES FR GB IT LI**

(56) Entgegenhaltungen:
**EP-A- 0 045 488**
**FR-A- 1 442 899**
**GB-A- 1 067 300**

(73) Patentinhaber: **HOECHST AKTIENGESELLSCHAFT**
**Postfach 80 03 20**
**W-6230 Frankfurt am Main 80(DE)**

(72) Erfinder: **Springer, Hartmut, Dr.**
**Am Erdbeerstein 27**
**W-6240 Königstein/Taunus(DE)**
Erfinder: **Kühn, Manfred, Dr.**
**Löwengasse 52**
**W-6000 Frankfurt am Main 60(DE)**
Erfinder: **Russ, Werner Herbert, Dr.**
**Berliner Strasse 10**
**W-6238 Hofheim am Taunus(DE)**
Erfinder: **Schläfer, Ludwig, Dr.**
**Königsberger Strasse 40**
**W-6233 Kelkheim (Taunus)(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Disazofarbstoffe.

Aus der Literatur sind faserreaktive Disazoverbindungen mit einer Chlortriazingruppierung bekannt, die als braune Farbstoffe Cellulosefasern zu färben vermögen. Den technischen Anforderungen, die heutzutage an faserreaktive Farbstoffe gestellt werden, genügen sie in der Regel nicht, da sie nur ungenügende anwendungstechnische Eigenschaften besitzen, wie beispielsweise eine zu geringe Faserreaktivität, die Färbetemperaturen von oberhalb 70°C erfordert, ein ungenügendes Ziehvermögen und einen schlechten Farbaufbau; auch besitzen die mit ihnen erhältlichen Färbungen eine zu geringe Säurelagerbeständigkeit, d.h. sie zeigen ein deutliches "acid fading". So sind beispielsweise aus der US-A 3 950 128 braune Disazofarbstoffe bekannt, deren Reaktivität zur Faser nur gering ist und die färberisch erst bei Temperaturen oberhalb 70°C angewendet werden können; darüberhinaus haben die mit ihnen erhältlichen Färbungen eine nur geringe Säurelagerbeständigkeit. Gleiches gilt für in der EP-A- 0 042 108 beschriebene braune Disazofarbstoffe, mit denen zudem teilweise nur unegale Färbungen erhältlich sind. Ebenfalls besitzt der im Beispiel 7 der EP-A- 0 202 570 beschriebene faserreaktive Disazofarbstoff neben den obengenannten Nachteilen auch ein ungenügendes Ziehvermögen und einen schlechten Farbaufbau.

Desweiteren sind aus der französischen Patentschrift 1 442 899 unter Nrs. (3) und (5) auf Seite 11 zwei braune Disazofarbstoffe mit einem Phenylazonaphthylazophenylamino- bzw. Phenylazophenylazophenylamino-Chromophor bekannt, an deren Aminogruppe eine 4-[N-Methyl-N-(β-thiosulfatoethylsulfonyl)-amino]-benzoyl-Gruppe gebunden ist.

Es bestand somit weiterhin ein technisches Bedürfnis, faserreaktive braune Farbstoffe herzustellen, die ausreichend gute anwendungstechnische Eigenschaften und Echtheiten besitzen.

Mit der vorliegenden Erfindung wurden nunmehr neue Disazoverbindungen gefunden, die nicht, wie die oben erwähnten bekannten Disazoverbindungen, einen heterocyclischen faserreaktiven Rest enthalten, und die in überraschender Weise die bei den bekannten braunen Disazofarbstoffen erwähnten Nachteile nicht besitzen. Die erfindungsgemäßen Disazoverbindungen entsprechen der allgemeinen Formel (1)

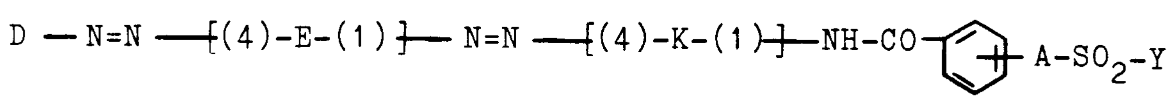

(1)

in welcher bedeuten:

- D ist der Phenylrest, der durch 1, 2 oder 3 Substituenten substituiert sein kann, wobei die Substituenten aus der folgenden Menge an Substituenten ausgewählt sind: 2 Sulfogruppen, 2 Carboxygruppen, 2 Alkylgruppen von 1 bis 4 C-Atomen, wie Ethyl- und insbesondere Methylgruppen, 2 Alkoxygruppen von 1 bis 4 C-Atomen, wie Ethoxy- und insbesondere Methoxygruppen, 1 Alkanoylaminogruppe von 2 bis 4 C-Atomen, wie die Propionylamino- und insbesondere die Acetylaminogruppe, und 2 Chloratome, wobei mindestens einer dieser Substituenten eine Sulfogruppe oder Carboxygruppe ist, oder
- D ist der 1- oder 2-Naphthylrest, bevorzugt der 2-Naphthylrest, die durch 2 oder 3 Sulfogruppen substituiert sind;
- E ist der 1,4-Phenylenrest, wobei die mit D verbundene Azogruppe an E in 4-Stellung und die mit K verbundene Azogruppe an E in 1-Stellung gebunden ist, der durch 1 oder 2 Substituenten substituiert ist, wobei die Substituenten aus der folgenden Menge von Substituenten ausgewählt sind: 2 Alkylgruppen von 1 bis 4 C-Atomen, wie die Ethyl- und insbesondere Methylgruppen, 2 Alkoxygruppen von 1 bis 4 C-Atomen, wie die Ethoxy- und insbesondere Methoxygruppen, 1 Alkanoylaminogruppe von 2 bis 4 C-Atomen, wie die Propionylaminogruppe und insbesondere die Acetylaminogruppe, 1 Ureidogruppe und 1 Chloratom, oder
- E ist der 1,4-Naphthylenrest, wobei die mit D verbundene Azogruppe an E in 4-Stellung und die mit K verbundene Azogruppe an E in 1-Stellung gebunden ist, der durch 1 oder 2 Sulfogruppen, bevorzugt 1 Sulfogruppe, substituiert sein kann;
- K ist der 1,4-Phenylenrest, wobei die mit E verbundene Azogruppe an K in 4-Stellung und die Benzoylamidogruppe an K in 1-Stellung gebunden ist und der Phenylenrest durch 1 oder 2 Substituenten substituiert ist, wobei die Substituenten aus der folgenden Menge von Substituenten ausgewählt sind: 2 Alkylgruppen von 1 bis 4 C-Atomen, wie die Ethyl- und insbesondere

Methylgruppen, 2 Alkoxygruppen von 1 bis 4 C-Atomen, wie die Ethoxy- und insbesondere Methoxygruppen, 1 Alkanoylaminogruppe von 2 bis 4 C-Atomen, wie die Propionylaminogruppe und insbesondere die Acetylaminogruppe, 1 Ureidogruppe und 1 Chloratom; oder ist der 1,4-Naphthylenrest, wobei die mit E verbundene Azogruppe an K in 4-Stellung und die Benzoylamidogruppe an K in 1-Stellung gebunden ist und der Naphthylenrest durch 1 oder 2 Sulfogruppen, bevorzugt 1 Sulfogruppe, substituiert sein kann;

A ist eine direkte kovalente Bindung oder die Methylengruppe, falls K ein substituierter 1,4-Phenylenrest ist, oder ist eine direkt Bindung, die Methylengruppe oder eine substituierte Aminogruppe der allgemeinen Formel -N(R)- , worin R eine Alkylgruppe von 1 bis 4 C-Atomen, wie die Ethylgruppe und insbesondere die Methylgruppe, oder die β-Cyanoethyl-Gruppe bedeutet, falls K ein gegebenenfalls sulfosubstituierter 1,4-Naphthylenrest ist, wobei A jeweils bevorzugt eine direkte kovalente Bindung ist;

Y ist die Vinylgruppe oder die β-Chlorethyl-Gruppe.

In den Disazoverbindungen der allgemeinen Formel (1) ist D beispielsweise die 4,6,8-Trisulfo-2-naphthyl-, 3,6,8-Trisulfo-2-naphthyl-, 2,5,7-Trisulfo-1-naphthyl-, 1,5-Disulfo-2-naphthyl-, 1,6-Disulfo-2-naphthyl-, 4,8-Disulfo-2-naphthyl-, 3,6-Disulfo-2-naphthyl-, 3,7-Disulfo-2-naphthyl-, 5,7-Disulfo-2-naphthyl-, 6,8-Disulfo-2-naphthyl-, 2,5-Disulfo-phenyl-, 4-Methyl-2,5-disulfo-phenyl-, 4-Methoxy-2,5-disulfo-phenyl-, 4-Acetylamino-2,5-disulfo-phenyl- und 4-Acetylamino-2,6-disulfo-phenyl-Gruppe, hiervon bevorzugt die 3,6,8-Trisulfo-2-naphthyl-, 4,6,8-Trisulfo-2-naphthyl-, 4,8-Disulfo-2-naphthyl-, 2,5-Disulfo-phenyl-, 4-Methyl-2,5-disulfo-phenyl-, 4-Methoxy-2,5-disulfo-phenyl- und die 4-Acetylamino-2,5-disulfophenyl-Gruppe.

Reste E in der allgemeinen Formel (1) sind beispielsweise die 8-Sulfo-1,4-naphthylen-Gruppe, die 6-Sulfo-1,4-naphthylen- und die 7-Sulfo-1,4-naphthylen-Gruppe sowie ein Gemisch der 6- und 7-Sulfo-1,4-naphthylen-Reste, die 2-Methoxy-5-methyl-1,4-phenylen-, 2,5-Dimethyl-1,4-phenylen-, 3-Methyl-1,4-phenylen-, 3-Acetylamino-1,4-phenylen-, 3-Ureido-1,4-phenylen-, 2-Chlor-5-methyl-1,4-phenylen-Gruppe, hiervon insbesondere bevorzugt die 6-Sulfo- oder 7-Sulfo-1,4-naphthylen-Gruppe oder ein Gemisch dieser beiden Gruppen.

Reste K in der allgemeinen Formel (1) sind beispielsweise die 8-Sulfo-1,4-naphthylen-, 6-Sulfo-1,4 naphthylen- und die 7-Sulfo-1,4-naphthylen-Gruppe sowie ein Gemisch der 6- und 7-Sulfo-1,4-naphthylen-Reste, die 2-Methoxy-5-methyl-1,4-phenylen-, 2,5-Dimethyl-1,4-phenylen-, 3-Methyl-1,4-phenylen-, 3-Acetylamino-1,4-phenylen-, 3-Ureido-1,4-phenylen-, 2-Chlor-5-methyl-1,4-phenylen-Gruppe, hiervon bevorzugt die 6-Sulfo- oder 8-Sulfo-1,4-naphthylen-Gruppe, die 2-Methoxy-5-methyl-1,4-phenylen-und die 3-Methyl-1,4-phenylen-Gruppe.

Bevorzugt steht die Gruppe $-A-SO_2-Y$ in meta- oder para-Stellung zur Carbonylamido-Gruppe an den Benzolkern gebunden.

In den vorstehenden und nachstehenden Angaben bedeutet eine Sulfogruppe eine Gruppe entsprechend der allgemeinen Formel $-SO_3M$ und eine Carboxygruppe eine Gruppe der allgemeinen Formel -COOM, in welchen M die nachstehend angegebene Bedeutung besitzt.

Von den erfindungsgemäßen Disazoverbindungen sind diejenigen bevorzugt, die den allgemeinen Formeln (1a), (1b), (1c) und (1d)

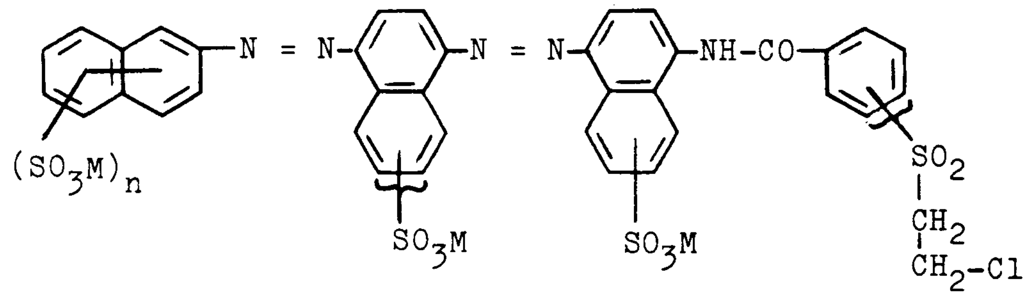

(1a)

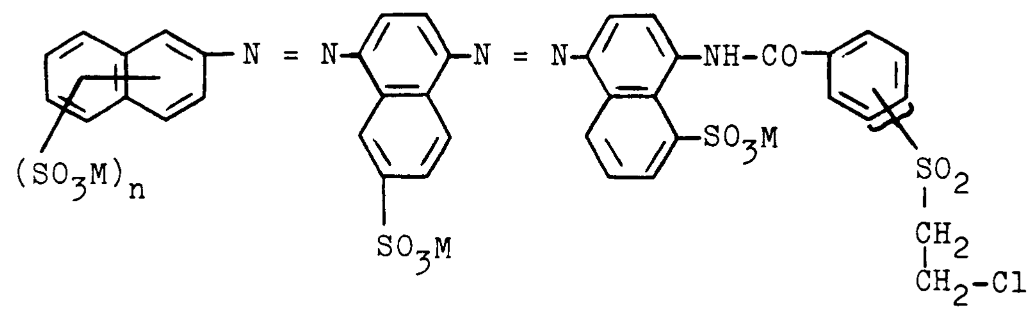

(1b)

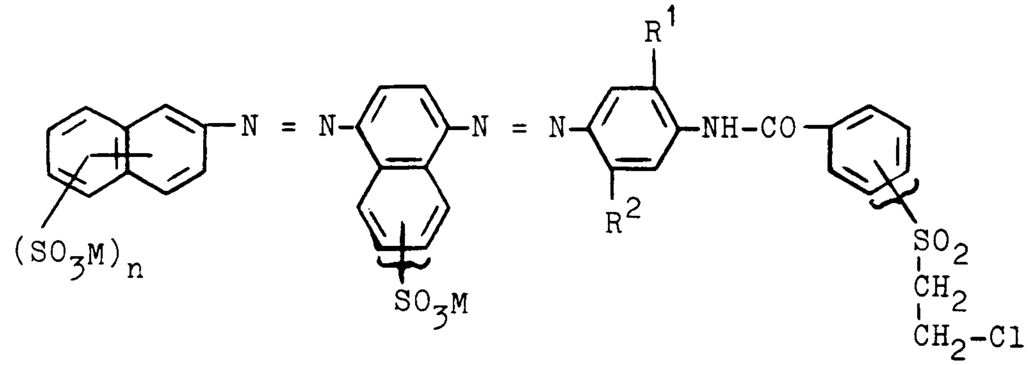

(1c)

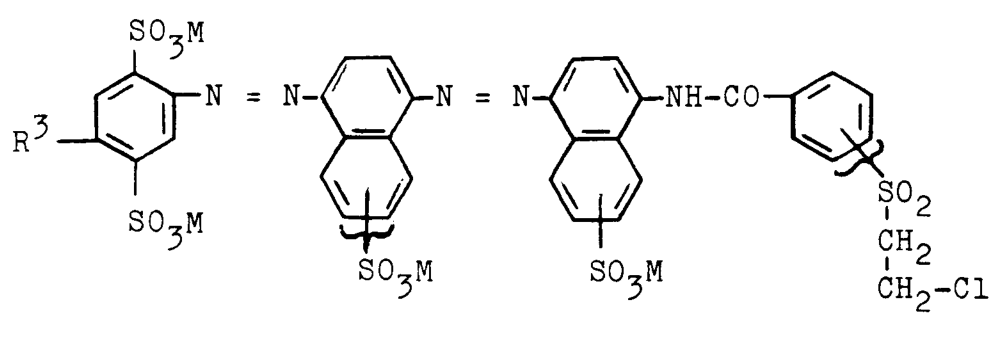

(1d).

entsprechen, worin bedeuten:

- M ist ein Wasserstoffatom oder ein salzbildendes Metall, wie ein Erdalkalimetall, wie Calcium, oder bevorzugt ein Alkalimetall, wie Natrium, Kalium und Lithium;
- n ist die Zahl 2 oder 3;
- $R^1$ ist ein Wasserstoffatom, die Methylgruppe oder Methoxygruppe;
- $R^2$ ist die Methylgruppe oder die Acetylamino- oder Ureidogruppe;

$R^3$ ist ein Wasserstoffatom, die Methyl-, Methoxy- oder Acetylaminogruppe.

Die erfindungsgemäßen Disazoverbindungen können in Form ihrer freien Säure und in Form ihrer Salze, bevorzugt Alkalimetallsalze, vorliegen. Sie finden bevorzugt in Form dieser Salze ihre Verwendung zum Färben oder Bedrucken von hydroxy- und/oder carbonamidgruppenhaltigem Material, insbesondere Fasermaterial.

Die vorliegende Erfindung betrifft weiterhin ein Verfahren zur Herstellung der erfindungsgemäßen Disazoverbindungen. Es ist dadurch gekennzeichnet, daß man eine Amino-Disazoverbindung der allgemeinen Formel (2)

$$D-N=N-[(4)-E-(1)]-N=N-[(4)-K-(1)]-NH_2 \qquad (2)$$

in welcher D, E und K die obengenannten Bedeutungen haben und die Aminogruppe an K in 4-Stellung gebunden ist, mit einem Carbonsäurechlorid der allgemeinen Formel (3)

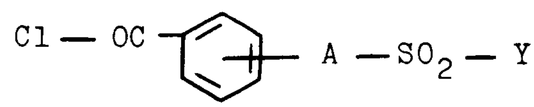
(3)

in welcher A und Y die obengenannten Bedeutungen haben und die Gruppe $-A-SO_2-Y$ bevorzugt in meta- oder para-Stellung zur Carbonsäurechloridgruppe an den Benzolkern gebunden ist, umsetzt.

Die Umsetzung der Amino-Disazoverbindungen der allgemeinen Formel (2) mit den Säurechloriden der allgemeinen Formel (3) erfolgt analog an und für sich bekannten Verfahrensweisen, wie sie beispielsweise in den US-Patentschriften Nrs. 3 098 096 und 4 473 498 beschrieben sind. So führt man die Umsetzung in einem wäßrig-organischen oder bevorzugt in rein wäßrigem Medium durch; als organischer Lösemittelanteil verwendet man übliche organische Lösemittel, die gegenüber den Umsetzungskomponenten inert sind und das Säurechlorid zu lösen vermögen. Organische Lösemittel dieser Art sind beispielsweise Toluol, Chlorbenzol, Dichlorethan und Aceton. Die Umsetzung erfolgt in der Regel bei einem pH-Wert zwischen 4 und 7, vorzugsweise zwischen 5 und 6, und bei einer Temperatur zwischen 10 und 70° C, bevorzugt zwischen 20 und 30° C. Die Carbonsäurechlorid-Ausgangsverbindung kann hierbei in fester oder geschmolzener Form oder in Form einer Lösung in dem organischen Lösemittel dem Reaktionsansatz zugegeben werden.

Geeignete Säurechloride entsprechend der allgemeinen Formel (3) sind beispielsweise 3-(β-Chlorethylsulfonyl)-benzoylchlorid, 4-(β-Chlorethylsulfonyl)-benzoylchlorid, 3 [(β-Chlorethylsulfonyl)-methyl]-benzoylchlorid, 4-[(β-Chlorethylsulfonyl)-methyl]-benzoylchlorid, 3-[N-Methyl-N-(β-chlorethylsulfonyl)]-benzoylchlorid und 4-[N-Methyl-N-(β-chlorethylsulfonyl)]-benzoylchlorid, desweiteren ebenso 3-|N-(β-Cyanoethyl)-N-(β-chlorethylsulfonyl)]-amino-benzoylchlorid, 3-Vinylsulfonyl-benzoylchlorid und 4-Vinylsulfonyl-benzoylchlorid.

Die Ausgangs-Aminodisazoverbindungen der allgemeinen Formel (2) sind bekannt, beispielsweise aus den anfangs genannten US-PS 3 950 128, EP-A-O 42 108 und EP-A-O 202 570 und aus Colour Index, 3 Auflage, Band 4, C.I.-Nrs. 26300, 26305, 26310, 26315 und 26320, oder können analog diesen per se beschriebenen Aminodisazo-Ausgangsverbindungen hergestellt werden.

Die Benzoylchlorid-Ausgangsverbindungen der allgemeinen Formel (3) sind beispielsweise in den US-Patentschriften Nrs. 4 473 498 und 3 305 559 und der britischen Patentschrift 1 438 051 beschrieben.

Die Abscheidung der erfindungsgemäß hergestellten Disazoverbindungen der allgemeinen Formel (1) aus ihren Syntheseansätzen erfolgt nach allgemein bekannten Methoden, so beispielsweise durch Ausfällen aus dem Reaktionsmedium mittels einem Elektrolytsalz, wie beispielsweise Natriumchlorid oder Kaliumchlorid, oder durch Eindampfen der Reaktionslösung, beispielsweise durch Sprühtrocknung, wobei dieser Syntheselösung eine Puffersubstanz und/oder ein Lösungsvermittler zugefügt werden kann. Die neuen Disazoverbindungen der allgemeinen Formel (1) haben sehr gute faserreaktive Farbstoffeigenschaften und können deshalb zum Farben von hydroxy- und/oder carbonamidgruppenhaltigem Material, beispielsweise in Form von Flächengebilden, wie Folien und Papier, wie auch Leder, oder in der Masse, wie Polyamid und Polyurethan, insbesondere jedoch von Materialien in Faserform, verwendet werden. Ebenso können die bei der Synthese der erfindungsgemäßen Verbindungen anfallende Lösungen, gegebenenfalls nach Zusatz einer Puffersubstanz und/oder eines Lösungsvermittlers und gegebenenfalls nach Konzentrierung der Lösung direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben dieser Materialien (einschließlich der Massefärbung und des Bedruckens) bzw. Verfahren zum Färben solcher Materialien in an und für sich üblicher Verfahrensweise, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11und Polyamid-4.

Die erfindungsgemäßen Verbindungen der Formel (1) lassen sich auf den genannten Substraten, insbesondere auf den genannten Fasermaterialien, nach den für wasserlösliche Farbstoffe, insbesondere für faserreaktive Farbstoffe bekannten Anwendungstechniken applizieren und fixieren.

Solche Anwendungs- und Fixierweisen in der Druckerei- und Färbereitechnik für faserreaktive Farbstoffe sind allgemein bekannt und in der Fachliteratur und Patentliteratur, wie beispielsweise in der bereits erwähnten US-PS 4 473 498 beschrieben. Die mit den erfindungsgemäßen Disazoverbindungen erhältlichen Färbungen und Drucke zeigen sehr gute Lichtechtheiten auf trockenem oder mit Trinkwasser oder einer sauren oder alkalischen Schweißlösung befeuchtetem Gewebe, desweiteren gute Naßechtheiten, wie beispielsweise bei der 60° C- und 95° C-Wäsche, einschließlich der Peroxidwäsche, gute alkalische und saure Schweißechtheiten, eine gute Wasserechtheit, Chlorbadewasserechtheit und Säurelagerbeständigkeit, desweiteren eine gute Stickoxid-, Abgas- und Reibechtheit. Die erfindungsgemäßen Disazoverbindungen färben im Ausziehverfahren bereits bei 40° C die genannten Materialien in farbstarken gelbstichig bis blaustichig braunen Tönen mit sehr gutem Farbaufbau. Die mit ihnen erhältlichen Drucke besitzen einen klaren Weißfond und eine hohe Konturenschärfe.

Die nachstehenden Beispiele dienen zur Erläuterung der Erfindung. Die formelmäßig beschriebenen Verbindungen sind in Form der freien Säuren angegeben. Im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Die in den Beispielen genannten Teile sind Gewichtsteile und die Prozentangaben stellen Gewichtsprozente dar, sofern nicht anders vermerkt. Gewichtsteile stehen zu Volumenteilen im Verhältnis von Kilogramm zu Liter.

Die in Beispielen für erfindungsgemäße Azoverbindungen angegebenen Absorptionsmaxima ($\lambda_{max}$-Werte in nm) im sichtbaren Bereich wurden aus wäßriger Lösung der Alkalimetallsalze der erfindungsgemäßen Azoverbindungen ermittelt.

Beispiel 1

44,9 Teile des Natriumsalzes von 2-Naphthylamin-4,6,8-trisulfonsäure werden in üblicher Weise diazotiert (beispielsweise durch Eingießen deren Lösung in 100 Teilen Wasser, die noch 7 Teile Natriumnitrit enthält, in ein Gemisch aus 200 Teilen Eis und 7 Volumenteilen konzentrierter Schwefelsäure). Nach Beendigung der Diazotierungsreaktion und Zerstören von überschüssigem Nitrit gibt man die neutrale Lösung von 22,3 Teilen 1-Naphthylamin-6-sulfonsäure in 200 Teilen Wasser hinzu, stellt den pH-Wert auf 3,5 und rührt bis zur Beendigung der Kupplungsreaktion nach.

Zur Lösung der gebildeten Aminoazoverbindung gibt man 100 Teile Eis und 10 Teile konzentrierte Schwefelsäure und diazotiert die Aminoazoverbindung mittels etwa 20 Volumenteilen einer wäßrigen 5n-Natriumnitritlösung. Sodann gibt man 22,3 Teile 1-Naphthylamin-8-sulfonsäure als zweite Kupplungskomponente hinzu, wobei man die Kupplungsreaktion bei einem pH-Wert zwischen 3 und 4 und einer Temperatur zwischen 10 und 20° C durchführt. Danach wird der Reaktionsansatz in üblicher Weise geklärt.

Die geklärte Lösung der Amino-Disazoverbindung wird unter Einhaltung eines pH-Wertes zwischen 5 und 6 und bei einer Temperatur zwischen 15 und 25° C innerhalb von 1 bis 2 Stunden unter gutem Rühren mit 32 Teilen 3-($\beta$-Chlorethylsulfonyl)-benzoylchlorid versetzt. Hierbei kann der Fortgang der Acylierungsreaktion durch die übliche Dünnschicht- oder Papierchromatographie verfolgt werden (Verschwinden der blauen Amino-disazo-Ausgangsverbindung).

Nach Beendigung der Acylierungsreaktion wird das Reaktionsgemisch erneut geklärt, der Ansatz auf einen pH-Wert von 45 gestellt und eingedampft oder sprühgetrocknet. Das hieraus erhältliche elektrolytsalzhaltige dunkelbraune Produkt enthält die erfindungsgemäße Verbindung (als Natriumsalz) entsprechend der Formel

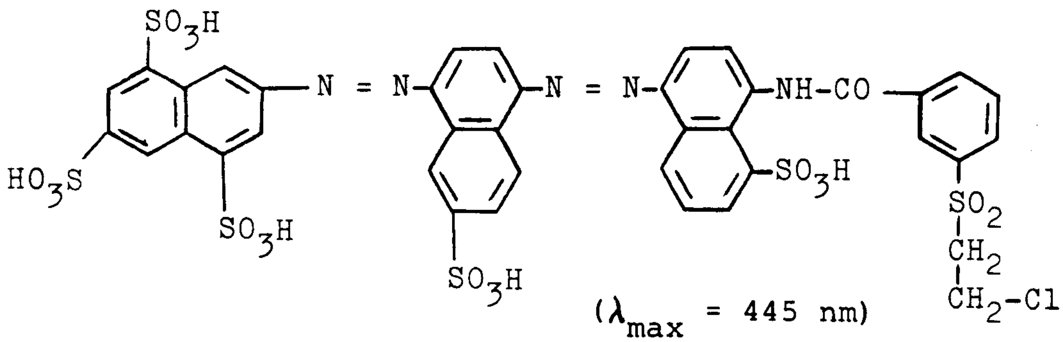

($\lambda_{max}$ = 445 nm)

die sehr gute Farbstoffeigenschaften besitzt und nach den für faserreaktive Farbstoffe bekannten Anwendungs- und Fixerverfahren, so beispielsweise auf Polyamidfasern im schwach sauren pH-Bereich und auf Cellulosefasern in neutralem bis stark alkalischem Bereich, farbstarke Färbungen und Drucke von echter, violettstichig brauner Nuance liefert. Die Färbungen und Drucke zeichnen sich durch gute Naßechtheiten aus, wie beispielsweise durch gute Wasch-, Wasser-, alkalische und saure Schweiß-, Chlorwasser- und Chlorbleichechtheiten, desweiteren durch eine gute Abgasechtheit und durch gute Lichtechtheiten auf trockenem oder auf mit Trinkwasser oder mit einer alkalischen Schweißlösung imprägnierten Gewebe. Beim Drucken auf Cellulosefasermaterialien sowohl nach den üblichen Einphasen- als auch Zweiphasen-Druckverfahren werden die farbstarken Drucke mit scharfen Druckkanten und einem reinen Weißfond erhalten, da die nicht fixierten Farbstoffanteile leicht auswaschbar sind.

Beispiele 2 bis 108

In den nachfolgenden Tabellenbeispielen sind weitere erfindungsgemäße Disazoverbindungen mit Hilfe der Formelglieder entsprechend einer allgemeinen Formel (A)

$$D-N=N-[(4)-E-(1)]-N=N-[(4)-K-(1)]-NH-CO-Z \qquad (A)$$

beschrieben. Sie lassen sich in erfindungsgemäßer Weise, beispielsweise analog dem obigen Ausführungsbeispiel, herstellen. Sie besitzen gute faserreaktive Farbstoffeigenschaften und liefern auf den in der Beschreibung genannten Fasermaterialien, insbesondere auf Cellulosefasermaterialien unter neutralen bis stark alkalischen Fixierbedingungen, farbstarke Färbungen und Drucke in dem in dem jeweiligen Tabellenbeispiel angegebenen Farbton (die in Klammer befindlichen Zahlenangaben sind die Absorptionsmaxima in nm).

| Bsp. | Disazoverbindung der Formel (A) Rest D- | Rest -E- | Rest -K- | Rest -Z | Farbton |
|---|---|---|---|---|---|
| 2 | 4,6,8-Trisulfo-2-naphthyl | 6-Sulfo-1,4-naphthylen | 8-Sulfo-1,4-naphthylen | 3-Vinylsulfonyl-phenyl | blaustichig braun |
| 3 | dito | dito | 6-Sulfo-1,4-naphthylen | 3-(ß-Chlorethyl-sulfonyl)-phenyl | dito |
| 4 | dito | (6+7)-Sulfo-1,4-naphthylen | dito | dito | dito |
| 5 | dito | 2-Methoxy-5-methyl-1,4-phenylen | dito | dito | braun |
| 6 | dito | 6-Sulfo-1,4-naphthylen | dito | dito | blaustichig braun |
| 7 | dito | dito | dito | 4-(ß-Chlorethyl-sulfonyl)-phenyl | dito |
| 8 | dito | dito | 8-Sulfo-1,4-naphthylen | dito | dito |
| 9 | dito | (6+7)-Sulfo-1,4-naphthylen | dito | dito | dito |
| 10 | dito | dito | dito | 3-[(ß-Chlorethyl-sulfonyl)-methyl]-phenyl | dito |
| 11 | dito | dito | dito | 4-[(ß-Chlorethyl-sulfonyl)-methyl]-phenyl | dito |
| 12 | dito | dito | dito | 4-[N-Methyl-N-(ß-chlorethylsulfonyl)-amino]-phenyl | dito |
| 13 | dito | dito | dito | 3-[N-Methyl-N-(ß-chlorethylsulfonyl)-amino]-phenyl | dito |

| Bsp. | Disazoverbindung der Formel (A) | | | | |
|---|---|---|---|---|---|
| | Rest D- | Rest -E- | Rest -K- | Rest -Z | Farbton |
| 14 | 4,6,8-Trisulfo-2-naphthyl | 6-Sulfo-1,4-naphthylen | 8-Sulfo-1,4-naphthylen | 4-[N-Methyl-N-(ß-chlorethylsulfonyl)-amino]-phenyl | blaustichig braun |
| 15 | dito | dito | 6-Sulfo-1,4-naphthylen | 4-[(ß-Chlorethyl-sulfonyl)-methyl]-phenyl | dito |
| 16 | 3,6,8-Trisulfo-2-naphthyl | 1,4-Naphthylen | 8-Sulfo-1,4-naphthylen | 3-(ß-Chlorethyl-sulfonyl)-phenyl | dito |
| 17 | dito | dito | dito | 4-(ß-Chlorethyl-sulfonyl)-phenyl | dito |
| 18 | dito | 6-Sulfo-1,4-naphthylen | dito | 4-Vinylsulfonyl-phenyl | dito |
| 19 | dito | dito | 6-Sulfo-1,4-naphthylen | 4-(ß-Chlorethyl-sulfonyl)-phenyl | dito |
| 20 | dito | (6+7)-Sulfo-1,4-naphthylen | dito | dito | dito |
| 21 | dito | 2,5-Dimethyl-1,4-phenylen | dito | dito | braun |
| 22 | dito | dito | dito | 3-(ß-Chlorethyl-sulfonyl)-phenyl | braun |
| 23 | dito | 6-Sulfo-1,4-naphthylen | 8-Sulfo-1,4-naphthylen | 3-[(ß-Chlorethyl-sulfonyl)-methyl]-phenyl | blaustichig braun |
| 24 | dito | dito | dito | 4-[N-Methyl-N-(ß-chlorethylsulfonyl)]-amino-phenyl | dito |
| 25 | dito | dito | dito | 4-(N-Methyl-N-vinylsulfonyl)-amino-phenyl | dito |

Disazoverbindung der Formel (A)

| Bsp. | Rest D- | Rest -E- | Rest -K- | Rest -Z | Farbton |
|---|---|---|---|---|---|
| 26 | 2,5,7-Trisulfo-1-naphthyl | 1,4-Naphthylen | 8-Sulfo-1,4-naphthylen | 3-(ß-Chlorethyl-sulfonyl)-phenyl | blaustichig braun |
| 27 | dito | dito | 6-Sulfo-1,4-naphthylen | 4-(ß-Chlorethyl-sulfonyl)-phenyl | dito |
| 28 | dito | dito | dito | 3-(ß-Chlorethyl-sulfonyl)-phenyl | dito |
| 29 | 1,5-Disulfo-2-naphthyl | 6-Sulfo-1,4-naphthylen | dito | dito | rotstichig braun |
| 30 | dito | dito | 8-Sulfo-1,4-naphthylen | dito | dito |
| 31 | dito | dito | dito | 4-(ß-Chlorethyl-sulfonyl)-phenyl | dito |
| 32 | dito | (6+7)-Sulfo-1,4-naphthylen | dito | dito | dito |
| 33 | dito | dito | dito | 3-(ß-Chlorethyl-sulfonyl)-phenyl | dito |
| 34 | 1,6-Disulfo-2-naphthyl | 6-Sulfo-1,4-naphthylen | 6-Sulfo-1,4-naphthylen | dito | dito |
| 35 | dito | dito | dito | 4-(ß-Chlorethyl-sulfonyl)-phenyl | dito |
| 36 | dito | dito | 8-Sulfo-1,4-naphthylen | 3-(ß-Chlorethyl-sulfonyl)-phenyl | dito |
| 37 | dito | dito | dito | 4-(ß-Chlorethyl-sulfonyl)-phenyl | blaustichig braun |
| 38 | 4,8-Disulfo-2-naphthyl | dito | dito | dito | dito |
| 39 | dito | dito | dito | 3-(ß-Chlorethyl-sulfonyl-methyl)-phenyl | dito |

| Bsp. | Disazoverbindung der Formel (A) Rest D- | Rest -E- | Rest -K- | Rest -Z | Farbton |
|---|---|---|---|---|---|
| 40 | 4,8-Disulfo-2-naphthyl | 6-Sulfo-1,4-naphthylen | 6-Sulfo-1,4-naphthylen | 3-(ß-Chlorethyl-sulfonyl)-phenyl | blaustichig braun (446) |
| 41 | dito | dito | dito | 4-(ß-Chlorethyl-sulfonyl)-phenyl | blaustichig braun |
| 42 | dito | dito | dito | 4-[(ß-Chlorethyl-sulfonyl)-methyl]-phenyl | dito |
| 43 | dito | dito | dito | 4-[N-Methyl-N-(ß-chlorethylsulfonyl)]-amino-phenyl | dito |
| 44 | dito | dito | 8-Sulfo-1,4-naphthylen | 4-(ß-Chlorethyl-sulfonyl)-phenyl | dito |
| 45 | dito | dito | dito | 3-(ß-Chlorethyl-sulfonyl)-phenyl | dito |
| 46 | 3,6-Disulfo-2-naphthyl | dito | dito | dito | rotstichig braun |
| 47 | dito | dito | dito | 4-(ß-Chlorethyl-sulfonyl)-phenyl | dito |
| 48 | 3,7-Disulfo-2-naphthyl | dito | dito | dito | dito |
| 49 | dito | dito | dito | 3-(ß-Chlorethyl-sulfonyl)-phenyl | dito |
| 50 | 5,7-Disulfo-2-naphthyl | dito | dito | dito | dito |
| 51 | dito | dito | dito | 4-(ß-Chlorethyl-sulfonyl)-phenyl | dito |
| 52 | 6,8-Disulfo-2-naphthyl | dito | dito | dito | blaustichig braun |

| Bsp. | Disazoverbindung der Formel (A)<br>Rest D- | Rest -E- | Rest -K- | Rest -Z | Farbton |
|---|---|---|---|---|---|
| 53 | 6,8-Disulfo-2-naphthyl | 6-Sulfo-1,4-naphthylen | 8-Sulfo-1,4-naphthylen | 3-(ß-Chlorethyl-sulfonyl)-phenyl | blaustichig braun |
| 54 | 2,5-Disulfo-phenyl | dito | dito | dito | rotstichig braun |
| 55 | dito | dito | dito | 4-(ß-Chlorethyl-sulfonyl)-phenyl | dito |
| 56 | 4-Methyl-2,5-disulfo-phenyl | dito | dito | dito | dito |
| 57 | dito | dito | dito | 3-(ß-Chlorethyl-sulfonyl)-phenyl | dito |
| 58 | dito | dito | 6-Sulfo-1,4-naphthylen | dito | dito |
| 59 | dito | dito | dito | 4-(ß-Chlorethyl-sulfonyl)-phenyl | dito |
| 60 | 4-Methoxy-2,5-disulfo-phenyl | dito | 8-Sulfo-1,4-naphthylen | 3-(ß-Chlorethyl-sulfonyl)-phenyl | dito |
| 61 | dito | dito | dito | 4-(ß-Chlorethyl-sulfonyl)-phenyl | dito |
| 62 | 4-Acetylamino-2,5-disulfo-phenyl | dito | dito | dito | blaustichig braun |
| 63 | dito | dito | dito | 3-(ß-Chlorethyl-sulfonyl)-phenyl | dito |
| 64 | 4-Acetylamino-2,6-disulfo-phenyl | dito | dito | dito | dito |
| 65 | dito | dito | dito | 4-(ß-Chlorethyl-sulfonyl)-phenyl | dito |
| 66 | dito | dito | 6-Sulfo-1,4-naphthylen | dito | dito |

| Bsp. | Disazoverbindung der Formel (A) Rest D- | Rest -E- | Rest -K- | Rest -Z | Farbton |
|---|---|---|---|---|---|
| 67 | 4-Acetylamino-2,6-disulfo-phenyl | (6+7)-Sulfo-1,4-naphthylen | 6-Sulfo-1,4-naphthylen | 4-(ß-Chlorethylsulfonyl)-phenyl | blaustichig braun |
| 68 | dito | dito | dito | 3-(ß-Chlorethylsulfonyl)-phenyl | dito |
| 69 | 2,4-Disulfo-phenyl | dito | dito | dito | dito |
| 70 | dito | 6-Sulfo-1,4-naphthylen | 8-Sulfo-1,4-naphthylen | dito | dito |
| 71 | dito | dito | dito | 4-(ß-Chlorethylsulfonyl)-phenyl | dito |
| 72 | 4,6,8-Trisulfo-2-naphthyl | 2-Methoxy-5-methyl-1,4-phenylen | dito | dito | dito |
| 73 | dito | 2,5-Dimethyl-1,4-phenylen | dito | dito | dito |
| 74 | dito | 6-Sulfo-1,4-naphthylen | 3-Methyl-1,4-phenylen | dito | dito |
| 75 | 3,6,8-Trisulfo-2-naphthyl | dito | dito | dito | dito |
| 76 | dito | 2-Methoxy-5-methyl-1,4-phenylen | 8-Sulfo-1,4-naphthylen | dito | dito |
| 77 | dito | 2,5-Dimethyl-1,4-phenylen | dito | dito | dito |
| 78 | 2,5,7-Trisulfo-1-naphthyl | dito | dito | dito | dito |
| 79 | dito | 2-Methoxy-5-methyl-1,4-phenylen | 6-Sulfo-1,4-naphthylen | dito | dito |

| Bsp. | Disazoverbindung der Formel (A) Rest D- | Rest -E- | Rest -K- | Rest -Z | Farbton |
|---|---|---|---|---|---|
| 80 | 2,5,7-Trisulfo-1-naphthyl | 6-Sulfo-1,4-naphthylen | 3-Methyl-1,4-phenylen | 4-(ß-Chlorethyl-sulfonyl)-phenyl | rotstichig braun |
| 81 | dito | dito | 3-Acetylamino-1,4-phenylen | dito | dito |
| 82 | 1,5-Disulfo-2-naphthyl | 6-Sulfo-1,4-naphthylen | 3-Methyl-1,4-phenylen | dito | dito |
| 83 | dito | 2-Methoxy-5-methyl-1,4-phenylen | 6-Sulfo-1,4-naphthylen | dito | dito |
| 84 | dito | dito | 8-Sulfo-1,4-naphthylen | 3-(ß-Chlorethyl-sulfonyl)-phenyl | dito |
| 85 | dito | dito | dito | 4-(ß-Chlorethyl-sulfonyl)-phenyl | dito |
| 86 | 1,6-Disulfo-2-naphthyl | dito | dito | dito | dito |
| 87 | dito | 6-Sulfo-1,4-naphthylen | 3-Acetylamino-1,4-phenylen | dito | dito |
| 88 | dito | dito | dito | 3-(ß-Chlorethyl-sulfonyl)-phenyl | dito |
| 89 | 4,8-Disulfo-2-naphthyl | dito | dito | 4-(ß-Chlorethyl-sulfonyl)-phenyl | dito |
| 90 | dito | 2,5-Dimethyl-1,4-phenylen | 6-Sulfo-1,4-naphthylen | dito | dito |
| 91 | dito | dito | 8-Sulfo-1,4-naphthylen | dito | dito |
| 92 | dito | 2-Methoxy-5-methyl-1,4-phenylen | dito | dito | dito |

| Bsp. | Disazoverbindung der Formel (A) Rest D- | Rest -E- | Rest -K- | Rest -Z | Farbton |
|---|---|---|---|---|---|
| 93 | 4,8-Disulfo-1,4-naphthyl | 6-Sulfo-1,4-naphthylen | 3-Methyl-1,4-phenylen | 4-(ß-Chlorethyl-sulfonyl)-phenyl | rotstichig braun |
| 94 | 3,6-Disulfo-2-naphthyl | dito | dito | dito | dito |
| 95 | 3,7-Disulfo-2-naphthyl | dito | dito | dito | dito |
| 96 | 5,7-Disulfo-2-naphthyl | dito | dito | dito | dito |
| 97 | 6,8-Disulfo-2-naphthyl | dito | dito | dito | dito |
| 98 | dito | dito | 3-Acetylamino-1,4-phenylen | dito | dito |
| 99 | dito | 2-Methoxy-5-methyl-1,4-phenylen | 6-Sulfo-1,4-naphthylen | dito | dito |
| 100 | dito | dito | 8-Sulfo-1,4-naphthylen | dito | dito |
| 101 | 2,5-Disulfo-phenyl | dito | 6-Sulfo-1,4-naphthylen | dito | dito |
| 102 | dito | dito | (6+7)-Sulfo-1,4-naphthylen | dito | dito |
| 103 | dito | 2,5-Dimethyl-1,4-phenylen | dito | dito | dito |
| 104 | 4-Methyl-2,5-disulfo-phenyl | dito | dito | dito | gelbstichig braun |
| 105 | 4-Acetylamino-2,5-disulfo-phenyl | dito | dito | dito | rotstichig braun |

| Bsp. | Disazoverbindung der Formel (A) Rest D- | Rest -E- | Rest -K- | Rest -Z | Farbton |
|---|---|---|---|---|---|
| 106 | 4-Acetylamino-2,6-disulfo-phenyl | dito | (6+7)-Sulfo-1,4-phenylen | 4-(ß-Chlorethyl-sulfonyl)-phenyl | gelbstichig braun |
| 107 | 4-Methoxy-2,6-disulfo-phenyl | dito | dito | dito | dito |
| 108 | dito | dito | dito | 3-(ß-Chlorethyl-sulfonyl)-phenyl | dito |
| 109 | 4,8-Disulfo-2-naphthyl | (6+7)-Sulfo-1,4-naphthylen | 8-Sulfo-1,4-naphthylen | 4-(ß-Chloroethyl-sulfonyl)-phenyl | blaustichig braun (453) |
| 110 | dito | dito | dito | 4-[(ß-Chlorethyl-sulfonyl)-methyl]-phenyl | blaustichig braun (463) |
| 111 | dito | dito | dito | 3-(ß-Chlorethyl-sulfonyl)-phenyl | blaustichig braun (452) |
| 112 | 4,6,8-Trisulfo-2-naphthyl | dito | dito | dito | blaustichig braun (487) |
| 113 | dito | 6-Sulfo-1,4-naphthylen | 3-Methyl-1,4-phenylen | dito | gelbstichig braun (445) |
| 114 | dito | dito | 2-Methoxy-5-methyl-1,4-phenylen | 4-[(ß-Chlorethyl-sulfonyl)-methyl]-phenyl | rotstichig braun (461) |
| 115 | dito | dito | 3-Methyl-1,4-phenylen | dito | gelbstichig braun (449) |
| 116 | dito | (6+7)-Sulfo-1,4-naphthylen | dito | dito | gelbstichig braun (453) |
| 117 | dito | dito | dito | 3-(ß-Chlorethyl-sulfonyl)-phenyl | gelbstichig braun (445) |
| 118 | 4,8-Disulfo-2-naphthyl | 6-Sulfo-1,4-naphthylen | 8-Sulfo-1,4-naphthylen | 4-[(ß-Chlorethyl-sulfonyl)-methyl]-phenyl | blaustichig braun |

| Bsp. | Disazoverbindung der Formel (A) Rest D- | Rest -E- | Rest -K- | Rest -Z | Farbton |
|---|---|---|---|---|---|
| 119 | dito | dito | 3-Methyl-1,4-phenylen | dito | gelbstichig braun |
| 120 | dito | dito | dito | 3-(ß-Chlorethyl-sulfonyl)-phenyl | gelbstichig braun |
| 121 | 3,6,8-Trisulfo-2-naphthyl | 6-Sulfo-1,4-naphthylen | 6-Sulfo-1,4-naphthylen | dito | rotbraun (454) |
| 122 | dito | dito | 3-Methyl-1,4-phenylen | dito | gelbbraun (443) |
| 123 | dito | dito | dito | 4-[(ß-Chlorethyl-sulfonyl)-methyl]-phenyl | gelbbraun (440) |
| 124 | dito | dito | 2-Methoxy-5-methyl-1,4-phenylen | 3-(ß-Chlorethyl-sulfonyl)-phenyl | rotbraun (454) |
| 125 | dito | dito | 3-Acetylamino-1,4-phenylen | dito | braun (450) |
| 126 | dito | dito | 8-Sulfo-1,4-naphthylen | dito | rotbraun (456) |
| 127 | dito | dito | 2-Methoxy-5-methyl-1,4-phenylen | 4-[(ß-Chlorethyl-sulfonyl)-methyl]-phenyl | rotbraun (449) |
| 128 | dito | dito | 3-Methyl-1,4-phenylen | dito | gelbbraun (448) |
| 129 | dito | dito | 8-Sulfo-1,4-naphthylen | dito | rotbraun (455) |
| 130 | 4,6,8-Trisulfo-2-naphthyl | 7-Sulfo-1,4-naphthylen | 3-Methyl-1,4-phenylen | 3-(ß-Chlorethyl-sulfonyl)-phenyl | gelbstichig braun |

| Bsp. | Disazoverbindung der Formel (A) Rest D- | Rest -E- | Rest -K- | Rest -Z | Farbton |
|---|---|---|---|---|---|
| 131 | 3,6,8-Trisulfo-2-naphthyl | dito | dito | dito | gelbstichig braun |
| 132 | dito | 8-Sulfo-1,4-naphthylen | dito | dito | gelbstichig braun |
| 133 | 4,8-Disulfo-2-naphthyl | dito | 8-Sulfo-1,4-naphthylen | dito | blaustichig braun |
| 134 | dito | dito | 7-Sulfo-1,4-naphthylen | dito | rotstichig braun |
| 135 | dito | 7-Sulfo-1,4-naphthylen | dito | dito | rotstichig braun |
| 136 | dito | dito | 8-Sulfo-1,4-naphthylen | dito | blaustichig braun |

**Patentansprüche**

**Patentansprüche für folgende Vertragsstaaten : BE, CH, DE, FR, GB, IT, LI**

**1.** Verbindung entsprechend der allgemeinen Formel (1)

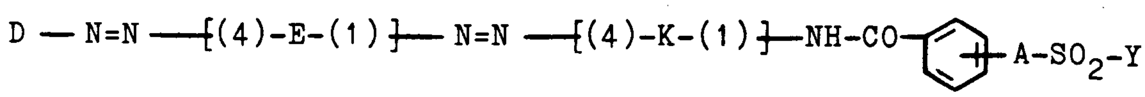

(1)

in welcher bedeuten:

D ist der Phenylrest, der durch 1, 2 oder 3 Substituenten substituiert sein kann, wobei die Substituenten aus der folgenden Menge an Substituenten ausgewählt sind: 2 Sulfogruppen, 2 Carboxygruppen, 2 Alkylgruppen von 1 bis 4 C-Atomen, 2 Alkoxygruppen von 1 bis 4 C-Atomen, 1 Alkanoylaminogruppe von 2 bis 4 C-Atomen und 2 Chloratome, wobei mindestens einer dieser Substituenten eine Sulfogruppe oder Carboxygruppe ist, oder

D ist der 1- oder 2-Naphthylrest, bevorzugt der 2-Naphthylrest, die durch 2 oder 3 Sulfogruppen substituiert sind;

E ist der 1,4-Phenylenrest, wobei die mit D verbundene Azogruppe an E in 4-Stellung und die mit K verbundene Azogruppe an E in 1-Stellung gebunden ist, der durch 1 oder 2 Substituenten substituiert ist, wobei die Substituenten aus der folgenden Menge von Substituenten ausgewählt sind: 2 Alkylgruppen von 1 bis 4 C-Atomen, 2 Alkoxygruppen von 1 bis 4 C-Atomen, 1 Alkanoylaminogruppe von 2 bis 4 C-Atomen, 1 Ureidogruppe und 1 Chloratom, oder

E ist der 1,4-Naphthylenrest, wobei die mit D verbundene Azogruppe an E in 1-Stellung und die mit K verbundene Azogruppe an E in 1-Stellung gebunden ist, der durch 1 oder 2 Sulfogruppen, bevorzugt 1 Sulfogruppe, substituiert sein kann;

K ist der 1,4-Phenylenrest, wobei die mit E verbundene Azogruppe an K in 4-Stellung und die Benzoylamidogruppe an K in 1-Stellung gebunden ist und der Phenylenrest durch 1 oder 2 Substituenten substituiert ist, wobei die Substituenten aus der folgenden Menge von Substituenten ausgewählt sind: 2 Alkylgruppen von 1 bis 4 C-Atomen, 2 Alkoxygruppen von 1 bis 4 C-Atomen, 1 Alkanoylaminogruppe von 2 bis 4 C-Atomen, 1 Ureidogruppe und 1 Chloratom; oder ist der 1,4-Naphthylenrest, wobei die mit E verbundene Azogruppe an K in 4-Stellung und die Benzoylamidogruppe an K in 1-Stellung gebunden ist und der Naphthylenrest durch 1 oder 2 Sulfogruppen, bevorzugt 1 Sulfogruppe, substituiert sein kann;

A ist eine direkte kovalente Bindung oder die Methylengruppe, falls K ein substituierter 1,4-Phenylenrest ist, oder ist eine direkte Bindung, die Methylengruppe oder eine Aminogruppe der Formel -N(R)- , worin R eine Alkylgruppe von 1 bis 4 C-Atomen oder die $\beta$-Cyanoethyl-Gruppe bedeutet, falls K ein gegebenenfalls sulfosubstituierter 1,4-Naphthylenrest ist, wobei A jeweils bevorzugt eine direkte kovalente Bindung ist;

Y ist die Vinylgruppe oder die $\beta$-Chlorethyl-Gruppe.

**2.** Verbindung nach Anspruch 1, dadurch gekennzeichnet, daß D die 3,6,8-Trisulfo-2-naphthyl-, 4,6,8-Trisulfo-2-naphthyl-, 4,8-Disulfo-2-naphthyl-, 2,5-Disulfo-phenyl-, 4-Methyl-2,5-disulfo-phenyl-, 4-Methoxy-2,5-disulfo-phenyl- oder 4-Acetylamino-2,5-disulfo-phenyl-Gruppe ist.

**3.** Verbindung nach Anspruch 1 oder 2, dadurch gekennzeichnet, daß E die 6-Sulfo- oder 7-Sulfo-1,4-naphthylen-Gruppe oder ein Gemisch dieser beiden Gruppen ist.

**4.** Verbindung nach mindestens einem der Ansprüche 1 bis 3, dadurch gekennzeichnet, daß K die 6-Sulfo-1,4-naphthylen-, 8-Sulfo-1,4-naphthylen-, 2-Methoxy-5-methyl-1,4-phenylen-, 2,5-Dimethyl-1,4-phenylen-, 3-Methyl-1,4-phenylen-, 3-Acetylamino-1,4-phenylen- oder die 3-Ureido-1,4-phenylen-Gruppe ist.

**5.** Verbindung nach Anspruch 1 der allgemeinen Formel (1a)

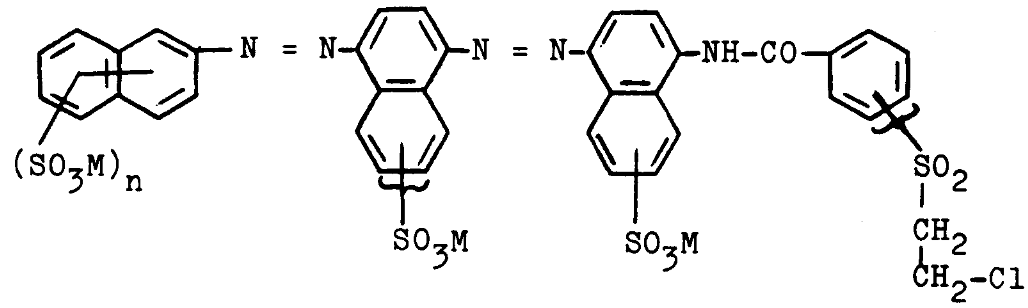

(1a)

in welcher M ein Wasserstoffatom oder ein salzbildendes Metall, bevorzugt ein Alkalimetall, wie insbesondere Natrium, Kalium oder Lithium, und n die Zahl 2 oder 3 ist.

**6.** Verbindung nach Anspruch 1 der allgemeinen Formel (1b)

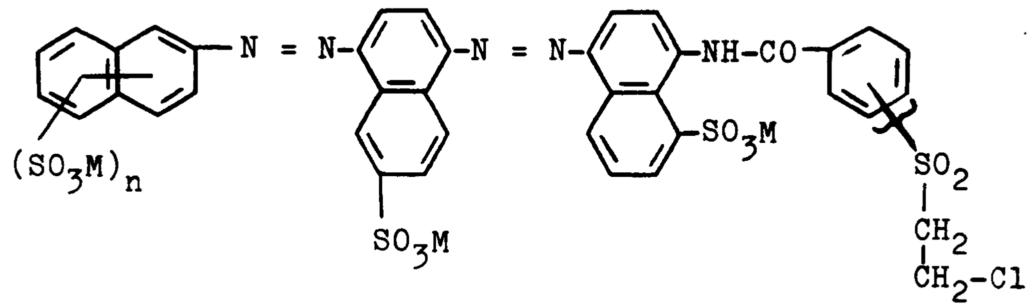

(1b)

in welcher M ein Wasserstoffatom oder ein salzbildendes Metall, bevorzugt ein Alkalimetall, wie insbesondere Natrium, Kalium oder Lithium, und n die Zahl 2 oder 3 ist.

**7.** Verbindung nach Anspruch 1 der allgemeinen Formel (1c)

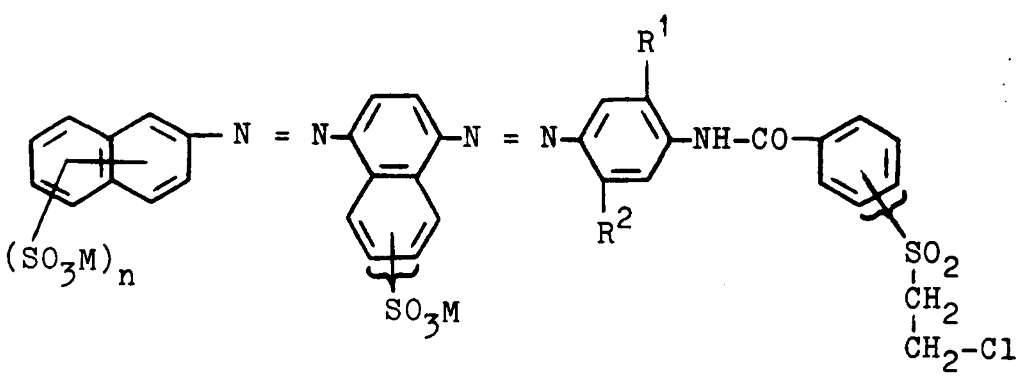

(1c)

in welcher M ein Wasserstoffatom oder ein salzbildendes Metall, bevorzugt ein Alkalimetall, wie insbesondere Natrium, Kalium oder Lithium, n für die Zahl 2 oder 3 steht, $R^1$ ein Wasserstoffatom, die Methyl- oder Methoxygruppe und $R^2$ die Methylgruppe oder die Acetylamino- oder Ureidogruppe ist.

**8.** Verbindung nach Anspruch 1 der allgemeinen Formel (1d)

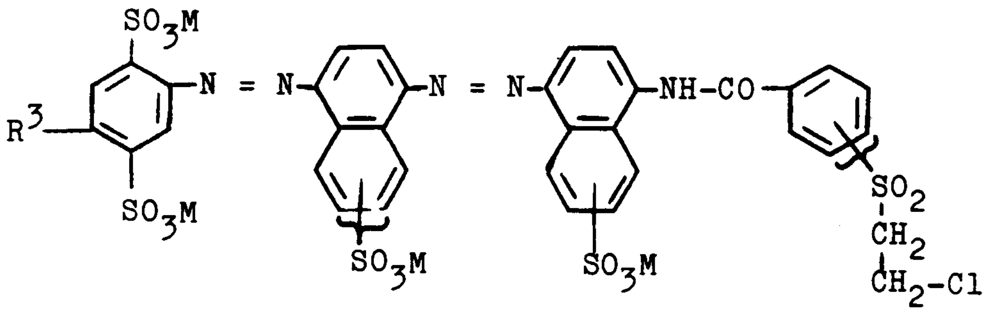

(1d)

in welcher M ein Wasserstoffatom oder ein salzbildendes Metall, bevorzugt ein Alkalimetall, wie insbesondere Natrium, Kalium oder Lithium, und $R^3$ ein Wasserstoffatom, die Methyl-, Methoxy- oder Acetylaminogruppe ist.

**9.** Verfahren zur Herstellung einer Verbindung der in Anspruch 1 genannten und definierten allgemeinen Formel (1), dadurch gekennzeichnet, daß man eine Amino-Disazoverbindung der allgemeinen Formel (2)

$$D - N = N - [(4)\text{-}E\text{-}(1)] - N = N - [(4)\text{-}K\text{-}(1)] - NH_2 \quad (2)$$

in welcher D, E und K die in Anspruch 1 genannten Bedeutungen haben und die Aminogruppe an K in 4-Stellung gebunden ist, mit einem Carbonsäurechlorid der allgemeinen Formel (3)

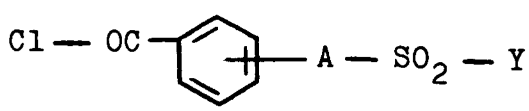

(3)

in welcher A und Y die in Anspruch 1 genannten Bedeutungen haben und die Gruppe $-A-SO_2-Y$ bevorzugt in meta- oder para-Stellung zur Carbonsäurechloridgruppe an den Benzolkern gebunden ist, umsetzt.

**10.** Verwendung einer Verbindung von mindestens einem der Ansprüche 1 bis 8, zum Färben (einschließlich Bedrucken) von hydroxy- und/oder carbonamidgruppenhaltigem Material, insbesondere Fasermaterial.

**11.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme und/oder mittels eines säurebindenden Mittels fixiert, dadurch gekennzeichnet, daß man als Farbstoff eine Verbindung von mindestens einem der Ansprüche 1 bis 8 einsetzt.

**Patentansprüche für folgenden Vertragsstaat : ES**

**1.** Verfahren zur Herstellung einer Verbindung entsprechend der allgemeinen Formel (1)

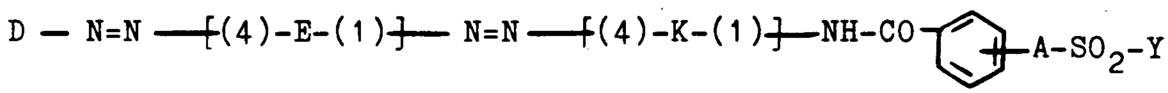

(1)

in welcher

- D der Phenylrest ist, der durch 1, 2 oder 3 Substituenten substituiert sein kann, wobei die Substituenten aus der folgenden Menge an Substituenten ausgewählt sind: 2 Sulfogruppen, 2 Carboxygruppen, 2 Alkylgruppen von 1 bis 4 C-Atomen, 2 Alkoxygruppen von 1 bis 4 C-Atomen, 1 Alkanoylaminogruppe von 2 bis 4 C-Atomen und 2 Chloratome, wobei mindestens einer dieser Substituenten eine Sulfogruppe oder Carboxygruppe ist, oder
- D der 1- oder 2-Naphthylrest ist, bevorzugt der 2-Naphthylrest, die durch 2 oder 3 Sulfogruppen substituiert sind;
- E der 1,4-Phenylenrest ist, wobei die mit D verbundene Azogruppe an E in 4-Stellung und die mit K verbundene Azogruppe an E in 1-Stellung gebunden ist, der durch 1 oder 2 Substituenten substituiert ist, wobei die Substituenten aus der folgenden Menge von Substituenten ausgewählt sind: 2 Alkylgruppen von 1 bis 4 C-Atomen, 2 Alkoxygruppen von 1 bis 4 C-Atomen, 1 Alkanoylaminogruppe von 2 bis 4 C-Atomen, 1 Ureidogruppe und 1 Chloratom, oder
- E der 1,4-Naphthylenrest ist, wobei die mit D verbundene Azogruppe an E in 4-Stellung und die mit K verbundene Azogruppe an E in 1-Stellung gebunden ist, der durch 1 oder 2 Sulfogruppen, bevorzugt 1 Sulfogruppe, substituiert sein kann;
- K der 1,4-Phenylenrest ist, wobei die mit E verbundene Azogruppe an K in 4-Stellung und die Benzoylamidogruppe an K in 1-Stellung gebunden ist und der Phenylenrest durch 1 oder 2 Substituenten substituiert ist, wobei die Substituenten aus der folgenden Menge von Substituenten ausgewählt sind: 2 Alkylgruppen von 1 bis 4 C-Atomen, 2 Alkoxygruppen von 1 bis 4 C-Atomen, 1 Alkanoylaminogruppe von 2 bis 4 C-Atomen, 1 Ureidogruppe und 1 Chloratom; oder der 1,4-Naphthylenrest ist, wobei die mit E verbundene Azogruppe an K in 4- Stellung und die Benzoylamidogruppe an K in 1-Stellung gebunden ist und der Naphthylenrest durch 1 oder 2 Sulfogruppen, bevorzugt 1 Sulfogruppe, substituiert sein kann;
- A eine direkte kovalente Bindung oder die Methylengruppe ist, falls K ein substituierter 1,4-Phenylenrest ist, oder eine direkte Bindung, die Methylengruppe oder eine Aminogruppe der Formel -N(R)- ist, worin R eine Alkylgruppe von 1 bis 4 C-Atomen oder die $\beta$-Cyanoethyl-Gruppe bedeutet, falls K ein gegebenenfalls sulfosubstituierter 1,4-Naphthylenrest, wobei A jeweils bevorzugt eine direkte kovalente Bindung ist, und
- Y die Vinylgruppe oder die $\beta$-Chlorethyl-Gruppe ist;

dadurch gekennzeichnet, daß man eine Amino-Disazoverbindung der allgemeinen Formel (2)

$$D - N = N -[(4)-E-(1)]- N = N -[(4)-K-(1)]- NH_2 \qquad (2)$$

in welcher D, E und K die oben genannten Bedeutungen haben und die Aminogruppe an K in 4-Stellung gebunden ist, mit einem Carbonsäurechlorid der allgemeinen Formel (3)

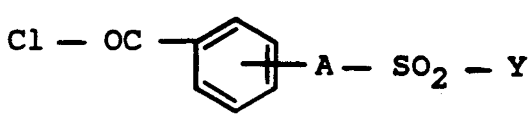

(3)

in welcher A und Y die oben genannten Bedeutungen haben und die Gruppe $-A-SO_2-Y$ bevorzugt in meta- oder para-Stellung zur Carbonsäurechloridgruppe an den Benzolkern gebunden ist, umsetzt.

2. Verfahren nach Anspruch 1, dadurch gekennzeichnet, daß D die 3,6,8-Trisulfo-2-naphthyl-, 4,6,8-Trisulfo-2-naphthyl-, 4,8-Disulfo-2-naphthyl-, 2,5-Disulfo-phenyl-, 4-Methyl-2,5-disulfo-phenyl-, 4-Methoxy-2,5-disulfo-phenyl- oder 4-Acetylamino-2,5-disulfo-phenyl-Gruppe ist.

3. Verfahren nach Anspruch 1 oder 2, dadurch gekennzeichnet, daß E die 6-Sulfo- oder 7-Sulfo-1,4-naphthylen-Gruppe oder ein Gemisch dieser beiden Gruppen ist.

4. Verfahren nach mindestens einem der Ansprüche 1 bis 3, dadurch gekennzeichnet, daß K die 6-Sulfo-1,4-naphthylen-, 8-Sulfo-1,4-naphthylen-, 2-Methoxy-5-methyl-1,4-phenylen-, 2,5-Dimethyl-1,4-phenylen-, 3-Methyl-1,4-phenylen-, 3-Acetylamino-1,4-phenylen- oder die 3-Ureido-1,4-phenylen-Gruppe ist.

5. Verfahren nach Anspruch 1, dadurch gekennzeichnet, daß die Verbindung der Formel (1) eine Verbindung der allgemeinen Formel (1a)

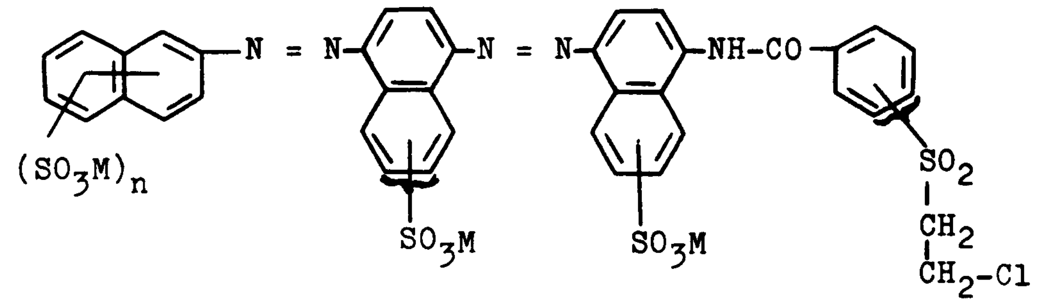

(1a)

ist, in welcher M ein Wasserstoffatom oder ein salzbildendes Metall, bevorzugt ein Alkalimetall, wie insbesondere Natrium, Kalium oder Lithium, ist und n für die Zahl 2 oder 3 steht.

6. Verfahren nach Anspruch 1, dadurch gekennzeichnet, daß die Verbindung der Formel (1) eine Verbindung der allgemeinen Formel (1b)

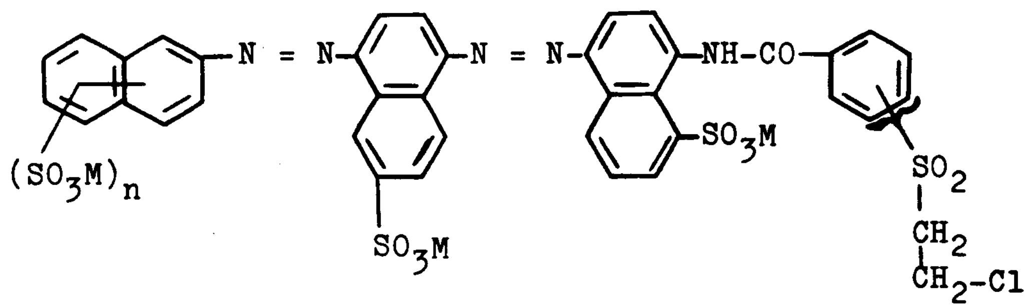

(1b)

ist, in welcher M ein Wasserstoffatom oder ein salzbildendes Metall, bevorzugt ein Alkalimetall, wie insbesondere Natrium, Kalium oder Lithium,ist und n für die Zahl 2 oder 3 steht.

7. Verfahren nach Anspruch 1, dadurch gekennzeichnet, daß die Verbindung der Formel (1) eine Verbindung der allgemeinen Formel (1c)

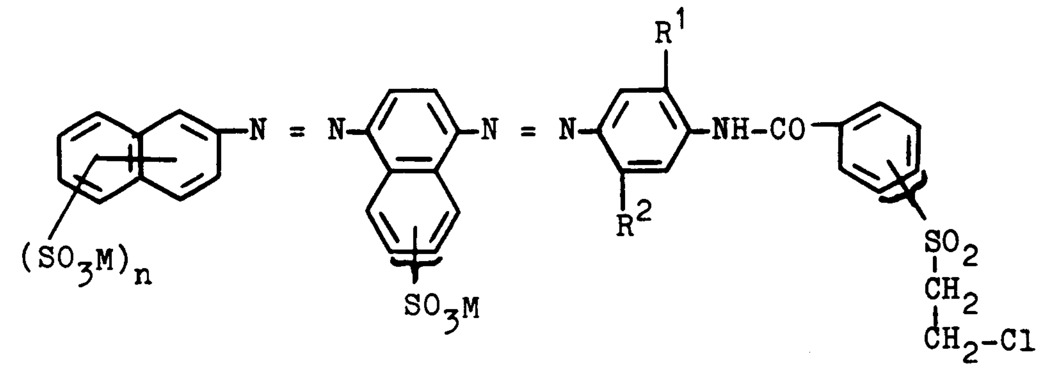

(1c)

ist, in welcher M ein Wasserstoffatom oder ein salzbildendes Metall, bevorzugt ein Alkalimetall, wie insbesondere Natrium, Kalium oder Lithium, n für die Zahl 2 oder 3 steht, $R^1$ ein Wasserstoffatom, die Methyl- oder Methoxygruppe und $R^2$ die Methylgruppe oder die Acetylamino- oder Ureidogruppe ist.

**8.** Verfahren nach Anspruch 1, dadurch gekennzeichnet, daß die Verbindung der Formel (1) eine Verbindung der allgemeinen Formel (1d)

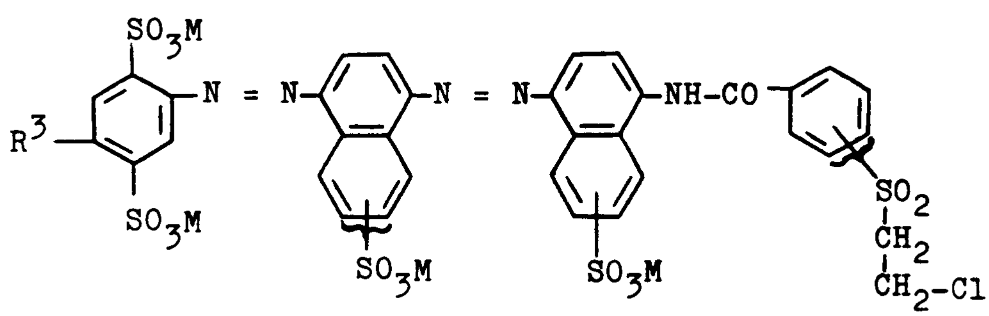

(1d)

ist, in welcher M ein Wasserstoffatom oder ein salzbildendes Metall, bevorzugt ein Alkalimetall, wie insbesondere Natrium, Kalium oder Lithium, und $R^3$ ein Wasserstoffatom, die Methyl-, Methoxy- oder Acetylaminogruppe ist.

**9.** Verwendung einer Azoverbindung von mindestens einem der Ansprüche 1 bis 8, zum Färben (einschließlich Bedrucken) von hydroxy- und/oder carbonamidgruppenhaltigem Material, insbesondere Fasermaterial.

**10.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme und/oder mittels eines säurebindenden Mittels fixiert, dadurch gekennzeichnet, daß man als Farbstoff eine Azoverbindung von mindestens einem der Ansprüche 1 bis 8 einsetzt.

**Claims**
**Claims for the following Contracting States : BE, CH, DE, FR, GB, IT, LI**

**1.** A compound according to the formula (1)

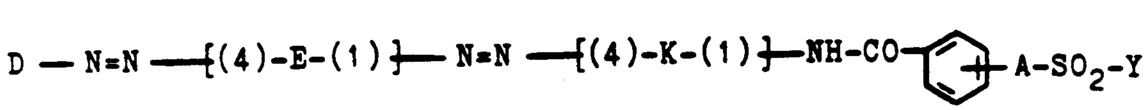

(1)

in which the symbols have the following meanings:

D is the phenyl radical which can be substituted by 1, 2 or 3 substituents, the substituents being selected from the following set of substituents: 2 sulfo groups, 2 carboxyl groups, 2 alkyl groups having 1 to 4 carbon atoms, 2 alkoxy groups having 1 to 4 carbon atoms, 1 alkanoylamino group having 2 to 4 carbon atoms, and 2 chlorine atoms, at least one of these substituents being a sulfo group or carboxyl group, or

D is the 1- or 2-naphthyl radical, preferably the 2-naphthyl radical, which are substituted by 2 or 3 sulfo groups;

E is the 1,4-phenylene radical, the azo group which is linked to D being bonded to E in the 4-position and the azo group which is linked to K being bonded to E in the 1-position, which is substituted by 1 or 2 substituents, the substituents being selected from the following set of substituents: 2 alkyl groups having 1 to 4 carbon atoms, 2 alkoxy groups having 1 to 4 carbon atoms, 1 alkanoylamino group having 2 to 4 carbon atoms, 1 ureido group and 1 chlorine atom, or

E is the 1,4-naphthylene radical, the azo group which is linked to D being bonded to E in the 4-position and the azo group which is linked to K being bonded to E in the 1-position, which can be substituted by 1 or 2 sulfo groups, preferably 1 sulfo group;

K is the 1,4-phenylene radical, the azo group which is linked to E being bonded to K in the 4-position and the benzoylamido group being bonded to K in the 1-position and the phenylene radical being substituted by 1 or 2 substituents, the substituents being selected from the following set of substituents: 2 alkyl groups having 1 to 4 carbon atoms, 2 alkoxy groups having 1 to 4 carbon atoms, 1 alkanoylamino group having 2 to 4 carbon atoms, 1 ureido group and 1 chlorine atom, or

K is the 1,4-naphthylene radical, the azo group which is linked to E being bonded to K in the 4-position and the benzoylamido group being bonded to K in the 1-position and it being possible for the naphthylene radical to be substituted by 1 or 2 sulfo groups, preferably 1 sulfo group;

A is a direct covalent bond or the methylene group, if K is a substituted 1,4-phenylene radical, or is a direct bond, the methylene group or an amino group of the formula -N(R)-, wherein R denotes an alkyl group having 1 to 4 carbon atoms, or denotes the $\beta$-cyanoethyl group, if K is an optionally sulfosubstituted 1,4-naphthylene radical, A preferably being a direct covalent bond;

Y is the vinyl group or the $\beta$-chloroethyl group.

**2.** The compound as claimed in claim 1, wherein D is the 3,6,8-trisulfo-2-naphthyl, 4,6,8-trisulfo-2-naphthyl, 4,8-disulfo-2-naphthyl, 2,5-disulfo-phenyl, 4-methyl-2,5-disulfo-phenyl, 4-methoxy-2,5-disulfo-phenyl or 4-acetylamino-2,5-disulfo-phenyl group.

**3.** The compound as claimed in claim 1 or 2, wherein E is the 6-sulfo- or 7-sulfo-1,4-naphthylene group or a mixture of these two groups.

**4.** The compound as claimed in at least one of claims 1 to 3, wherein K is the 6-sulfo-1,4-naphthylene, 8-sulfo-1,4-naphthylene, 2-methoxy-5-methyl-1,4-phenylene, 2,5-dimethyl-1,4-phenylene, 3-methyl-1,4-phenylene, 3-acetylamino-1,4-phenylene or the 3-ureido-1,4-phenylene group.

**5.** The compound as claimed in claim 1 of the formula (1a)

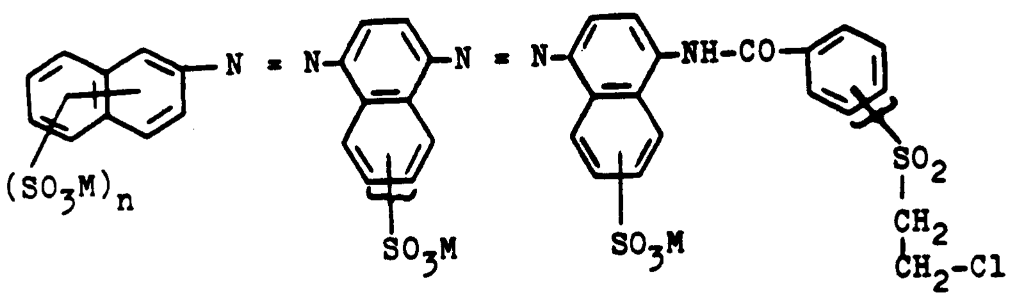

(1a)

in which M is a hydrogen atom or a salt-forming metal, preferably an alkali metal such as, in particular, sodium, potassium or lithium, and n is the number 2 or 3.

**6.** The compound as claimed in claim 1 of the formula (1b)

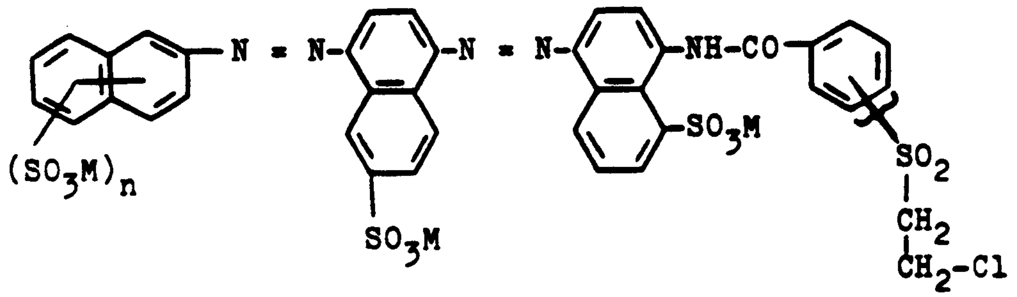

(1b)

in which M is a hydrogen atom or a salt-forming metal, preferably an alkali metal such as, in particular, sodium, potassium or lithium, and n is the number 2 or 3.

**7.** The compound as claimed in claim 1 of the formula (1c)

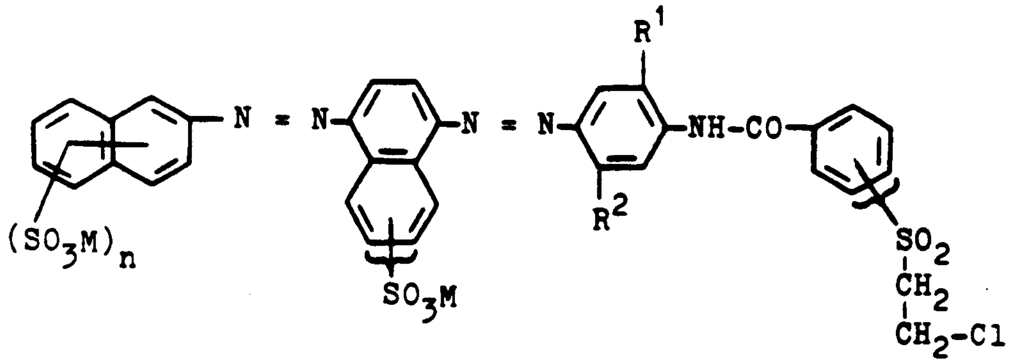

(1c)

in which M is a hydrogen atom or a salt-forming metal, preferably an alkali metal such as, in particular, sodium, potassium or lithium, n stands for the number 2 or 3, $R^1$ is a hydrogen atom, the methyl or methoxy group and $R^2$ is the methyl group or the acetylamino or ureido group.

**8.** The compound as claimed in claim 1 of the formula (1d)

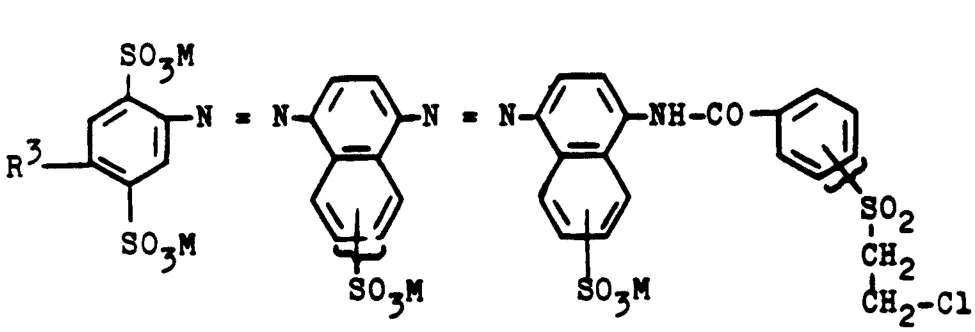

(1d)

in which M is a hydrogen atom or a salt-forming metal, preferably an alkali metal such as, in particular, sodium, potassium or lithium, and $R^3$ is a hydrogen atom, the methyl, methoxy or acetylamino group.

**9.** A process for preparing a compound of the formula (1) mentioned and defined in claim 1, which comprises reacting an aminodisazo compound of the formula (2)

$$D-N=N-[(4)-E-(1)]-N=N-[(4)-K-(1)]-NH_2 \quad (2)$$

in which D, E and K have the meanings mentioned in claim 1 and the amino group is bonded to K in the 4-position, with a carboxylic acid chloride of the formula (3)

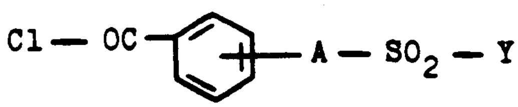

(3)

in which A and Y have the meanings mentioned in claim 1 and the group $-A-SO_2-Y$ is bonded to the benzene nucleus preferably in the meta- or paraposition with respect to the carboxylic acid chloride group.

**10.** Use of a compound of at least one of claims 1 to 8 for dyeing (including printing) hydroxyl- and/or carboxamido-containing material, in particular fiber material.

**11.** A process for dyeing (including printing) hydroxyl- and/or carboxamido-containing material, in particular fiber material, in which a dyestuff is applied to the material and fixed by means of heat and/or by means of an acid-binding agent, which comprises using as the dyestuff a compound of at least one of claims 1 to 8.

**Claims for the following Contracting State : ES**

**1.** A process for preparing a compound according to the formula (1)

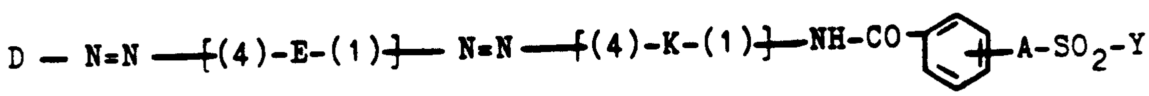

(1)

in which

D is the phenyl radical which can be substituted by 1, 2 or 3 substituents, the substituents being selected from the following set of substituents:
2 sulfo groups, 2 carboxyl groups, 2 alkyl groups having 1 to 4 carbon atoms, 2 alkoxy groups having 1 to 4 carbon atoms, 1 alkanoylamino group having 2 to 4 carbon atoms, and 2 chlorine atoms, at least one of these substituents being a sulfo group or carboxyl group, or

D is the 1- or 2-naphthyl radical, preferably the 2-naphthyl radical, which are substituted by 2 or 3 sulfo groups;

E is the 1,4-phenylene radical, the azo group which is linked to D being bonded to E in the 4-position and the azo group which is linked to K being bonded to E in the 1-position, which is substituted by 1 or 2 substituents, the substituents being selected from the following set of substituents: 2 alkyl groups having 1 to 4 carbon atoms, 2 alkoxy groups having 1 to 4 carbon atoms, 1 alkanoylamino group having 2 to 4 carbon atoms, 1 ureido group and 1 chlorine atom, or

E is the 1,4-naphthylene radical, the azo group which is linked to D being bonded to E in the 4-position and the azo group which is linked to K being bonded to E in the 1-position, which can be substituted by 1 or 2 sulfo groups, preferably 1 sulfo group;

K is the 1,4-phenylene radical, the azo group which is linked to E being bonded to K in the 4-position and the benzoylamido group being bonded to K in the 1-position and the phenylene

radical being substituted by 1 or 2 substituents, the substituents being selected from the following set of substituents: 2 alkyl groups having 1 to 4 carbon atoms, 2 alkoxy groups having 1 to 4 carbon atoms, 1 alkanoylamino group having 2 to 4 carbon atoms, 1 ureido group and 1 chlorine atom, or

K is the 1,4-naphthylene radical, the azo group which is linked to E being bonded to K in the 4-position and the benzoylamido group being bonded to K in the 1-position and it being possible for the naphthylene radical to be substituted by 1 or 2 sulfo groups, preferably 1 sulfo group;

A is a direct covalent bond or the methylene group, if K is a substituted 1,4-phenylene radical, or is a direct bond, the methylene group or an amino group of the formula -N(R)-, wherein R denotes an alkyl group having 1 to 4 carbon atoms, or denotes the $\beta$-cyanoethyl group, if K is an optionally sulfo-substituted 1,4-naphthylene radical, A preferably being a direct covalent bond; and

Y is the vinyl group or the $\beta$-chloroethyl group, which comprises reacting an aminodisazo compound of the formula (2)

$$D-N=N-[(4)-E-(1)]-N=N-[(4)-K-(1)]-NH_2 \qquad (2)$$

in which D, E and K have the abovementioned meanings, and the amino group is bonded to K in the 4-position, with a carboxylic acid chloride of the formula (3)

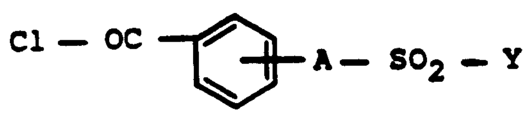

(3)

in which A and Y have the abovementioned meanings and the group -A-$SO_2$-Y is bonded to the benzene nucleus preferably in the meta- or para-position with respect to the carboxylic acid chloride group.

**2.** The process as claimed in claim 1, wherein D is the 3,6,8-trisulfo-2-naphthyl, 4,6,8-trisulfo-2-naphthyl, 4,8-disulfo-2-naphthyl, 2,5-disulfo-phenyl, 4-methyl-2,5-disulfo-phenyl, 4-methoxy-2,5-disulfo-phenyl or 4-acetylamino-2,5-disulfo-phenyl group.

**3.** The process as claimed in claim 1 or 2, wherein E is the 6-sulfo- or 7-sulfo-1,4-naphthylene group or a mixture of these two groups.

**4.** The process as claimed in at least one of claims 1 to 3, wherein K is the 6-sulfo-1,4-naphthylene, 8-sulfo-1,4-naphthylene, 2-methoxy-5-methyl-1,4-phenylene, 2,5-dimethyl-1,4-phenylene, 3-methyl-1,4-phenylene, 3-acetylamino-1,4-phenylene or the 3-ureido-1,4-phenylene group.

**5.** The process as claimed in claim 1, wherein the compound of the formula (1) is a compound of the formula (1a)

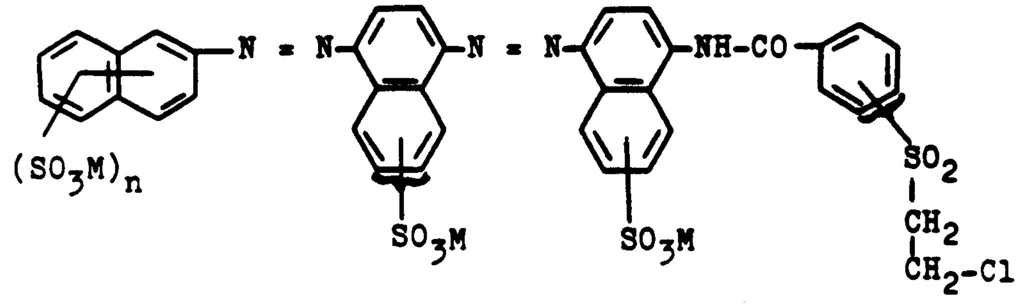

(1a)

in which M is a hydrogen atom or a salt-forming metal, preferably an alkali metal such as, in particular, sodium, potassium or lithium, and n stands for the number 2 or 3.

6. The process as claimed in claim 1, wherein the compound of the formula (1) is a compound of the formula (1b)

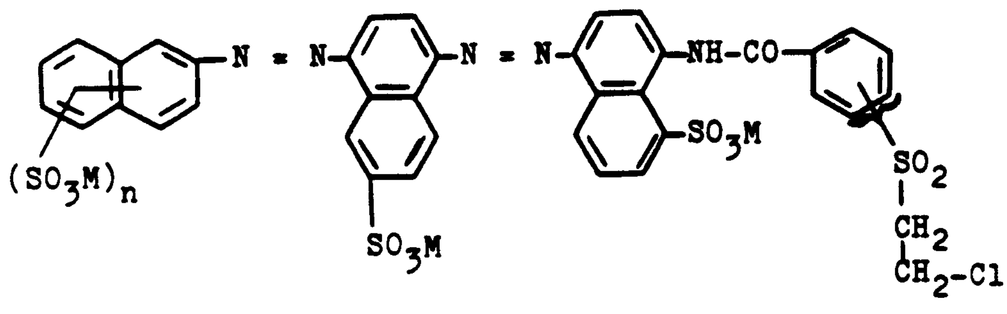

(1b)

in which M is a hydrogen atom or a salt-forming metal, preferably an alkali metal such as, in particular, sodium, potassium or lithium, and n stands for the number 2 or 3.

7. The process as claimed in claim 1, wherein the compound of the formula (1) is a compound of the formula (1c)

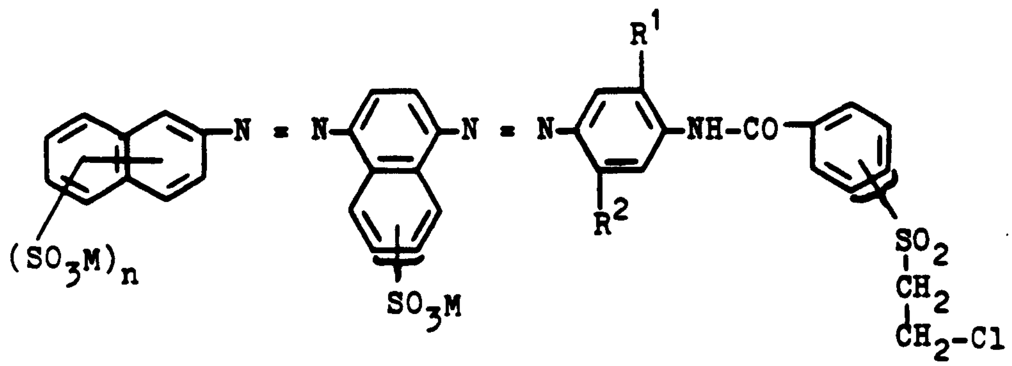

(1c)

in which M is a hydrogen atom or a salt-forming metal, preferably an alkali metal such as, in particular, sodium, potassium or lithium, n stands for the number 2 or 3, $R^1$ is a hydrogen atom, the methyl or methoxy group and $R^2$ is the methyl group or the acetylamino or ureido group.

8. The process as claimed in claim 1, wherein the compound of the formula (1) is a compound of the formula (1d)

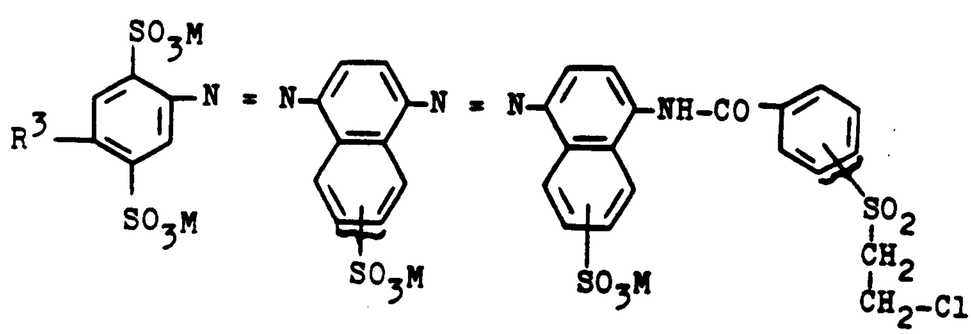

(1d)

in which M is a hydrogen atom or a salt-forming metal, preferably an alkali metal such as, in particular, sodium, potassium or lithium, and $R^3$ is a hydrogen atom, the methyl, methoxy or acetylamino group.

**9.** The use of an azo compound of at least one of the claims 1 to 8 for dyeing (including printing) hydroxyl- and/or carboxamido-containing material, in particular fiber material.

**10.** A process for dyeing (including printing) hydroxyl- and/or carboxamido-containing material, in particular fiber material, in which a dyestuff is applied to the material and fixed by means of heat and/or by means of an acid-binding agent, which comprises using as the dyestuff an azo compound of at least one of claims 1 to 8.

**Revendications**
**Revendications pour les Etats contractants suivants : BE, CH, DE, FR, GB, IT, LI**

**1.** Composé répondant à la formule générale 1 :

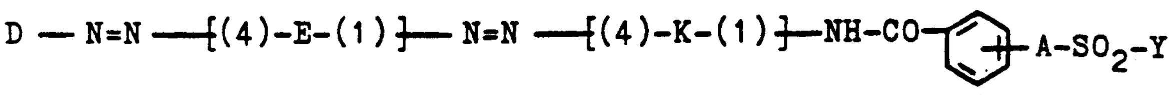

(1)

dans laquelle :

- D représente un radical phényle qui peut porter 1, 2 ou 3 substituants pris dans l'ensemble suivant : 2 radicaux sulfo, 2 radicaux carboxy, 2 radicaux alkyles contenant de 1 à 4 atomes de carbone, 2 radicaux alcoxy contenant de 1 à 4 atomes de carbone, 1 radical alcanoylamino contenant de 2 à 4 atomes de carbone et 2 atomes de chlore, au moins un de ces substituants étant un radical sulfo ou un radical carboxy, ou
- D représente un radical naphtyle-1 ou -2, de préférence naphtyle-2, qui porte deux ou trois radicaux sulfo,
- E représente un radical phénylène-1,4 qui est uni par sa position 4 au radical azo lié à D et par sa position 1 au radical azo lié à K et qui porte 1 ou 2 substituants, lesquels sont pris dans l'ensemble suivant : 2 alkyles contenant de 1 à 4 atomes de carbone, 2 alcoxy contenant de 1 à 4 atomes de carbone, 1 alcanoylamino contenant de 2 à 4 atomes de carbone, 1 uréido et 1 atome de chlore, ou
- E représente un radical naphtylène-1,4 qui est uni par sa position 4 au radical azo lié à D et par sa position 1 au radical azo lié à K et qui peut porter 1 ou 2 radicaux sulfo, de préférence 1 radical sulfo,
- K représente un radical phénylène-1,4 qui est uni par sa position 4 au radical azo lié à E et par sa position 1 au radical benzoylamino et qui porte 1 ou 2 substituants, lesquels sont pris dans l'ensemble suivant : 2 alkyles contenant de 1 à 4 atomes de carbone, 2 alcoxy contenant de 1 à 4 atomes de carbone, 1 alcanoylamino contenant de 2 à 4 atomes de carbone, 1 uréido et 1 atome de chlore, ou
- K représente un radical naphtylène-1,4 qui est uni par sa position 4 au radical azo lié à E et par sa position 1 au radical benzoylamino et qui peut porter 1 ou 2 radicaux sulfo, de préférence 1 radical sulfo,
- A est une liaison covalente directe ou un radical méthylène dans le cas où K représente un radical phénylène-1,4 substitué, ou est une liaison directe, un radical méthylène ou un radical amino -N(R)- dans lequel R représente un radical alkyle contenant de 1 à 4 atomes de carbone ou un radical cyano-2 éthyle dans le cas où K représente un radical naphtylène-1,4 éventuellement porteur d'un sulfo, le symbole A représentant de préférence, dans chaque cas, une liaison covalente directe, et
- Y représente un radical vinyle ou chloro-2 éthyle.

**2.** Composé selon la revendication 1 caractérisé en ce que D représente un radical trisulfo-3,6,8 naphtyle-2, trisulfo-4,6,8 naphtyle-2, disulfo-4,8 naphtyle-2, disulfo-2,5 phényle, méthyl-4 disulfo-2,5 phényle, méthoxy-4 disulfo-2,5 phényle ou acétylamino-4 disulfo-2,5 phényle.

3. Composé selon l'une des revendications 1 et 2, caractérisé en ce que E représente un radical sulfo-6 ou -7 naphtylène-1,4 ou un mélange de ces deux radicaux.

4. Composé selon au moins une des revendications 1 à 3, caractérisé en ce que K représente un radical sulfo-6 naphtylène-1,4, sulfo-8 naphtylène-1,4, méthoxy-2 méthyl-5 phénylène-1,4, diméthyl-2,5 phénylène-1,4, méthyl-3 phénylène-1,4, acétylamino-3 phénylène-1,4 ou uréido-3 phénylène-1,4.

5. Composé selon la revendication 1 qui répond à la formule générale 1a :

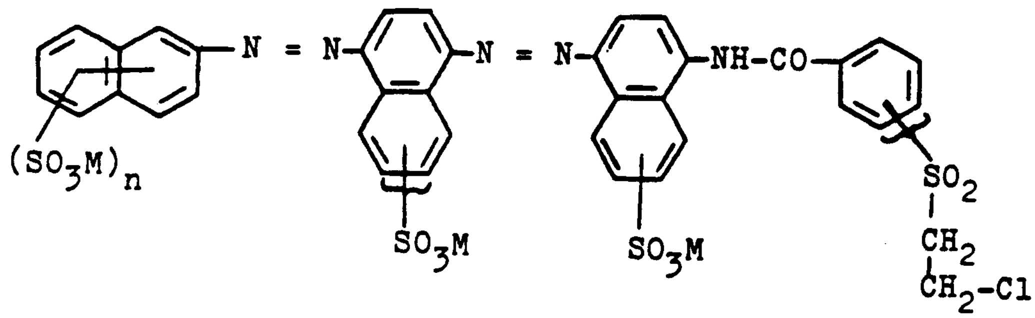

(1a)

dans laquelle M représente un atome d'hydrogène ou un métal apte à former un sel, de préférence un métal alcalin, en particulier le sodium, le potassium ou le lithium, et n désigne un nombre égal à 2 ou à 3.

6. Composé selon la revendication 1 qui répond à la formule générale 1b :

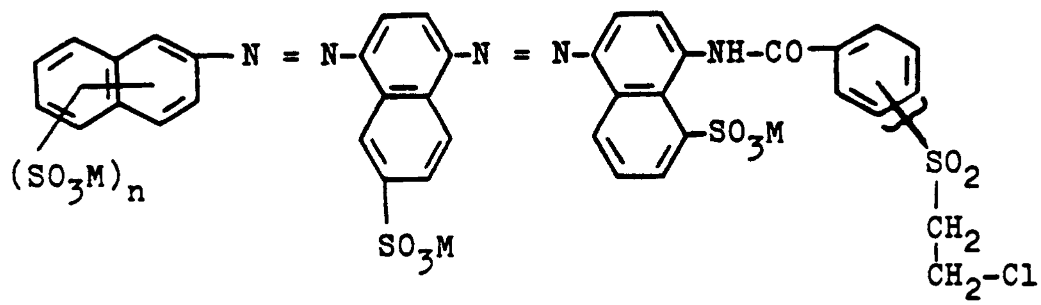

(1b)

dans laquelle M représente un atome d'hydrogène ou un métal apte à former un sel, de préférence un métal alcalin, plus particulièrement le sodium, le potassium ou le lithium, et n désigne un nombre égal à 2 ou à 3.

7. Composé selon la revendication 1 qui répond à la formule générale 1c :

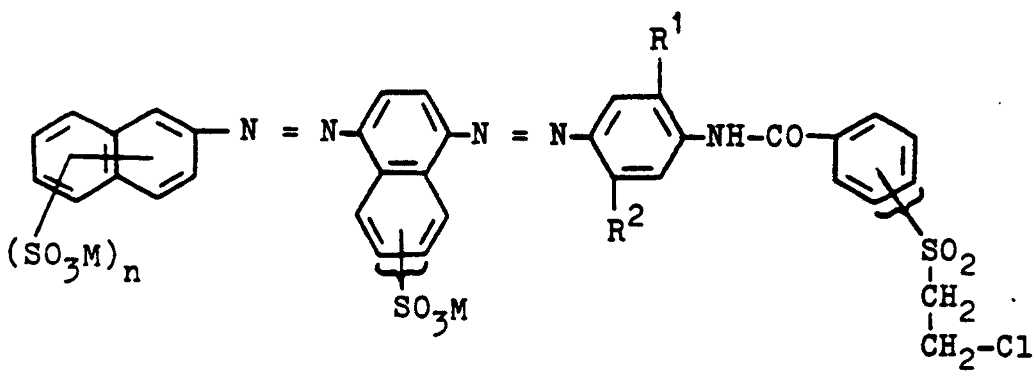

(1c)

dans laquelle M représente un atome d'hydrogène ou un métal apte à former un sel, de préférence un métal alcalin, plus particulièrement le sodium, le potassium ou le lithium, n désigne un nombre égal à 2 ou à 3, $R^1$ représente un atome d'hydrogène ou un radical méthyle ou méthoxy, et $R^2$ représente un radical méthyle, acétylamino ou uréido.

**8.** Composé selon la revendication 1 qui répond à la formule générale 1d :

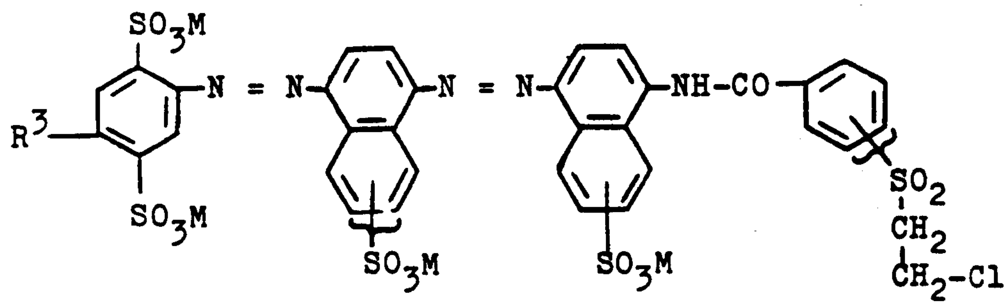

(1d)

dans laquelle M représente un atome d'hydrogène ou un métal apte à former un sel, de préférence un métal alcalin, plus particulièrement le sodium, le potassium ou le lithium, et $R^3$ représente un atome d'hydrogène ou un radical méthyle, méthoxy ou acétylamino.

**9.** Procédé pour préparer un composé répondant à la formule générale 1 qui a été représentée et définie à la revendication 1, procédé caractérisé en ce qu'on fait réagir un composé amino-disazoïque répondant à la formule générale 2 :

$$D - N = N - [(4)\text{-}E\text{-}(1)] - N = N - [(4)\text{-}K\text{-}(1)] - NH_2 \qquad (2)$$

dans laquelle D, E et K ont les significations qui leur ont été données à la revendication 1 et le radical amino se trouve à la position 4 sur K, avec un chlorure d'acide carboxylique répondant à la formule générale 3 :

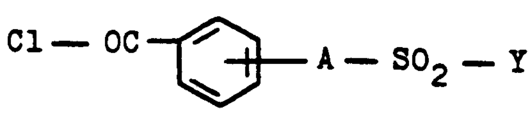

(3)

dans laquelle A et Y ont les significations données à la revendication 1, et le radical $-A-SO_2-Y$ se trouve de préférence, sur le noyau benzénique, en position méta ou para relativement au radical chlorocarbonyle.

**10.** Application d'un composé selon au moins une des revendications 1 à 8 pour la teinture (y compris l'impression) de matières contenant des radicaux hydroxy et/ou carbamoyles, plus particulièrement de matières fibreuses de ce genre.

**11.** Procédé pour teindre (y compris pour imprimer) des matières contenant des radicaux hydroxy et/ou carbamoyles, plus particulièrement des matières fibreuses de ce genre, selon lequel on applique un colorant sur la matière et on le fixe par la chaleur et/ou au moyen d'un accepteur d'acide, procédé caractérisé en ce qu'on utilise, comme colorant, un composé selon au moins une des revendications 1 à 8.

**Revendications pour l'Etat contractant suivant : ES**

**1.** Procédé pour préparer un composé répondant à la formule générale 1 :

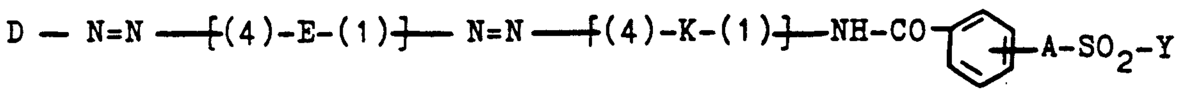

(1)

dans laquelle :

D représente un radical phényle qui peut porter 1, 2 ou 3 substituants pris dans l'ensemble suivant : 2 radicaux sulfo, 2 radicaux carboxy, 2 radicaux alkyles contenant de 1 à 4 atomes de carbone, 2 radicaux alcoxy contenant de 1 à 4 atomes de carbone, 1 radical alcanoylamino contenant de 2 à 4 atomes de carbone et 2 atomes de chlore, au moins un de ces substituants étant un radical sulfo ou un radical carboxy, ou

D représente un radical naphtyle-1 ou -2, de préférence naphtyle-2, qui porte deux ou trois radicaux sulfo,

E représente un radical phénylène-1,4 qui est uni par sa position 4 au radical azo lié à D et par sa position 1 au radical azo lié à K et qui porte 1 ou 2 substituants, lesquels sont pris dans l'ensemble suivant : 2 alkyles contenant de 1 à 4 atomes de carbone, 2 alcoxy contenant de 1 à 4 atomes de carbone, 1 alcanoylamino contenant de 2 à 4 atomes de carbone, 1 uréido et 1 atome de chlore, ou

E représente un radical naphtylène-1,4 qui est uni par sa position 4 au radical azo lié à D et par sa position 1 au radical azo lié à K et qui peut porter 1 ou 2 radicaux sulfo, de préférence 1 radical sulfo,

K représente un radical phénylène-1,4 qui est uni par sa position 4 au radical azo lié à E et par sa position 1 au radical benzoylamino et qui porte 1 ou 2 substituants, lesquels sont pris dans l'ensemble suivant : 2 alkyles contenant de 1 à 4 atomes de carbone, 2 alcoxy contenant de 1 à 4 atomes de carbone, 1 alcanoylamino contenant de 2 à 4 atomes de carbone, 1 uréido et 1 atome de chlore, ou

K représente un radical naphtylène-1,4 qui est uni par sa position 4 au radical azo lié à E et par sa position 1 au radical benzoylamino et qui peut porter 1 ou 2 radicaux sulfo, de préférence 1 radical sulfo,

A est une liaison covalente directe ou un radical méthylène dans le cas où K représente un radical phénylène-1,4 substitué, ou est une liaison directe, un radical méthylène ou un radical amino -N(R)- dans lequel R représente un radical alkyle contenant de 1 à 4 atomes de carbone ou un radical cyano-2 éthyle dans le cas où K représente un radical naphtylène-1,4 éventuellement porteur d'un sulfo, le symbole A représentant de préférence, dans chaque cas, une liaison covalente directe, et

Y représente un radical vinyle ou chloro-2 éthyle,

procédé caractérisé en ce qu'on fait réagir un composé amino-disazoïque répondant à la formule générale 2 :

$$D-N=N-\!\!\!+\!(4)\text{-}E\text{-}(1)\!+\!\!\!-N=N-\!\!\!+\!(4)\text{-}K\text{-}(1)\!+\!\!\!-NH_2 \qquad (2)$$

dans laquelle D, E et K ont les significations indiquées ci-dessus, et le radical amino est lié à K par la position 4, avec un chlorure d'acide carboxylique répondant à la formule générale 3 :

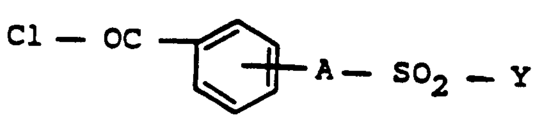

(3)

dans laquelle A et Y ont les significations indiquées ci-dessus et le radical $-A-SO_2-Y$ se trouve de

préférence, sur le noyau benzénique, en position méta ou para relativement au radical chlorocarbonyle.

**2.** Procédé selon la revendication 1 caractérisé en ce que D représente un radical trisulfo-3,6,8 naphtyle-2, trisulfo-4,6,8 naphtyle-2, disulfo-4,8 naphtyle-2, disulfo-2,5 phényle, méthyl-4 disulfo-2,5 phényle, méthoxy-4 disulfo-2,5 phényle ou acétylamino-4 disulfo-2,5 phényle.

**3.** Procédé selon l'une des revendications 1 et 2, caractérisé en ce que E représente un radical sulfo-6 ou -7 naphtylène-1,4 ou un mélange de ces deux radicaux.

**4.** Procédé selon au moins une des revendications 1 à 3, caractérisé en ce que K représente un radical sulfo-6 naphtylène-1,4, sulfo-8 naphtylène-1,4, méthoxy-2 méthyl-5 phénylène-1,4, diméthyl-2,5 phénylène-1,4, méthyl-3 phénylène-1,4, acétylamino-3 phénylène-1,4 ou uréido-3 phénylène-1,4.

**5.** Procédé selon la revendication 1 caractérisé en ce que le composé de formule 1 est un composé répondant à la formule générale 1a :

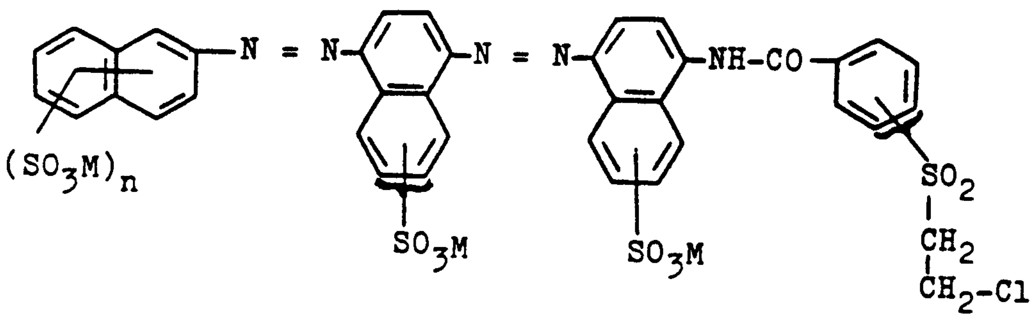

(1a)

dans laquelle M représente un atome d'hydrogène ou un métal apte à former un sel, de préférence un métal alcalin, en particulier le sodium, le potassium ou le lithium, et n désigne un nombre égal à 2 ou à 3.

**6.** Procédé selon la revendication 1 caractérisé en ce que le composé de formule 1 est un composé répondant à la formule générale 1b :

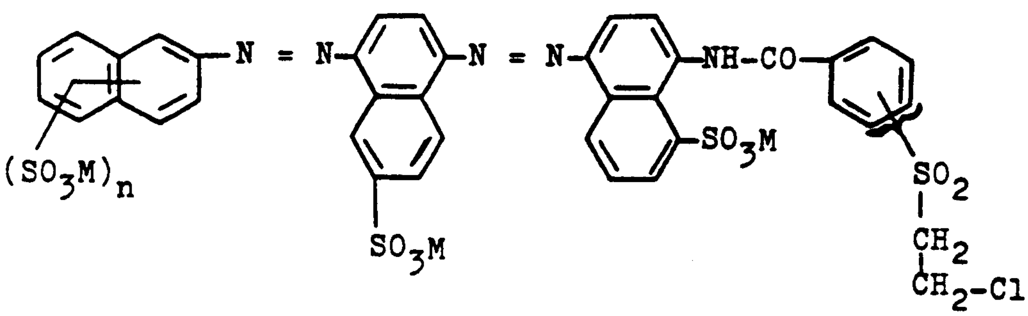

(1b)

dans laquelle M représente un atome d'hydrogène ou un métal apte à former un sel, de préférence un métal alcalin, plus particulièrement le sodium, le potassium ou le lithium, et n désigne un nombre égal à 2 ou à 3.

**7.** Procédé selon la revendication 1 caractérisé en ce que le composé de formule 1 est un composé répondant à la formule générale 1c :

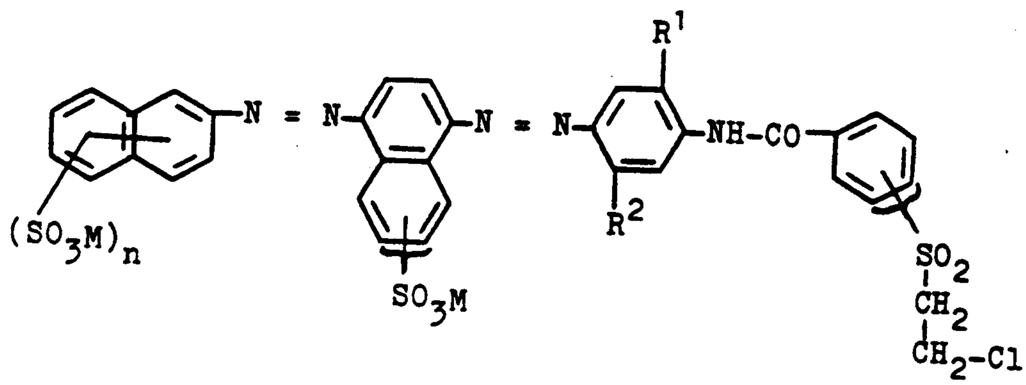

(1c)

dans laquelle M représente un atome d'hydrogène ou un métal apte à former un sel, de préférence un métal alcalin, plus particulièrement le sodium, le potassium ou le lithium, n désigne un nombre égal à 2 ou à 3, $R^1$ représente un atome d'hydrogène ou un radical méthyle ou méthoxy, et $R^2$ représente un radical méthyle, acétylamino ou uréido.

**8.** Procédé selon la revendication 1 caractérisé en ce que le composé de formule 1 est un composé répondant à la formule générale 1d :

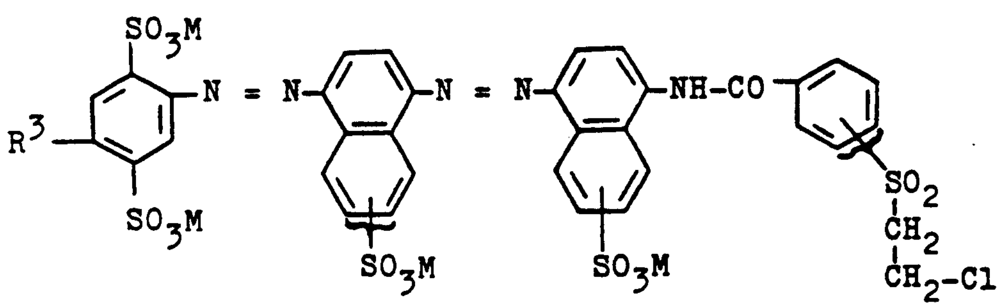

(1d)

dans laquelle M représente un atome d'hydrogène ou un métal apte à former un sel, de préférence un métal alcalin, plus particulièrement le sodium, le potassium ou le lithium, et $R^3$ représente un atome d'hydrogène ou un radical méthyle, méthoxy ou acétylamino.

**9.** Application d'un composé azoïque selon au moins une des revendications 1 à 8 pour la teinture (y compris l'impression) de matières contenant des radicaux hydroxy et/ou carbamoyles, plus particulièrement de matières fibreuses de ce genre.

**10.** Procédé pour teindre (y compris pour imprimer) des matières contenant des radicaux hydroxy et/ou des radicaux carbamoyles, plus particulièrement des matières fibreuses de ce genre, selon lequel on applique un colorant sur la matière et on le fixe par la chaleur et/ou au moyen d'un accepteur d'acide, procédé caractérisé en ce qu'on utilise, comme colorant, un composé azoïque selon au moins une des revendications 1 à 8.